(19) **Europäisches Patentamt / European Patent Office / Office européen des brevets**

(11) **EP 3 970 348 B1**

(12) # FASCICULE DE BREVET EUROPEEN

(45) Date de publication et mention
de la délivrance du brevet:
**28.06.2023 Bulletin 2023/26**

(21) Numéro de dépôt: **20742307.0**

(22) Date de dépôt: **12.05.2020**

(51) Classification Internationale des Brevets (IPC):
**H04L 69/24** *(2022.01)* **H04L 67/1074** *(2022.01)*
**H04L 67/104** *(2022.01)*

(52) Classification Coopérative des Brevets (CPC):
**H04L 67/104; G06F 11/1464; H04L 67/1076;
H04L 67/108; H04L 69/24**

(86) Numéro de dépôt international:
**PCT/FR2020/050787**

(87) Numéro de publication internationale:
**WO 2020/229772 (19.11.2020 Gazette 2020/47)**

(54) **PROCÉDÉ DE SAUVEGARDE DE DONNÉES DANS UN RÉSEAU PAIR-À-PAIR**

VERFAHREN ZUR SICHERUNG VON DATEN IN EINEM PEER-TO-PEER-NETZWERK

METHOD FOR BACKING UP DATA IN A PEER-TO-PEER NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.05.2019 FR 1905062**

(43) Date de publication de la demande:
**23.03.2022 Bulletin 2022/12**

(73) Titulaires:
• **Université Côte d'Azur
06100 Nice (FR)**
• **Centre National de la Recherche Scientifique
75016 Paris (FR)**

(72) Inventeur: **DALLE, Olivier
06100 NICE (FR)**

(74) Mandataire: **INNOV-GROUP
310, avenue Berthelot
69372 Lyon Cedex 08 (FR)**

(56) Documents cités:
**US-A1- 2006 271 601 US-A1- 2017 351 581**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé et un système de sauvegarde de données dans un réseau pair-à-pair. L'invention concerne également un support d'enregistrement d'informations et un noeud client pour la mise en oeuvre du procédé de sauvegarde.

Des procédés connus de sauvegarde de données dans un réseau pair-à-pair comportent les étapes suivantes :

  a) l'exécution par un noeud client du réseau pair-à-pair, d'un logiciel de sauvegarde pour générer un fichier de sauvegarde à partir duquel les données sauvegardées peuvent être restaurées,
  b) le découpage du fichier de sauvegarde généré en plusieurs blocs de données, et
  c) l'enregistrement des blocs de données dans la mémoire de différents noeuds de sauvegarde du réseau pair-à-pair.

Par exemple, un tel procédé est divulgué dans l'article suivant : Olivier Dalle et Al : « Analysis of Failure Corrélation in Peer-to-Peer Storage Systems », INRIA, rapport de recherche n° 6771, décembre 2008.

De l'état de la technique est également connu de US2006271601A et US2017351581A1.

L'un des principaux problèmes des procédés connus de sauvegarde de données dans un réseau pair-à-pair est d'améliorer la qualité de service. Par qualité de service, on désigne ici la capacité de restaurer, avec une probabilité garantie à l'avance, un volume prédéterminé de données en une durée maximale prédéterminée de restauration. L'amélioration de la qualité de service consiste donc typiquement, pour le même volume prédéterminé de données et pour la même durée maximale prédéterminée de restauration, à augmenter la probabilité garantie. Idéalement, la probabilité garantie doit être élevée, c'est-à-dire supérieure à 80 % ou 90 % ou 95%.

L'invention propose donc un procédé de sauvegarde de données dans un réseau pair-à-pair dans lequel la qualité de service est améliorée.

Elle a donc pour objet un tel procédé de sauvegarde conforme à la revendication 1.

Les modes de réalisation de ce procédé de sauvegarde peuvent comporter une ou plusieurs des caractéristiques des revendications dépendantes.

L'invention a également pour objet un support d'enregistrement d'informations, lisible par un microprocesseur, comportant des instructions pour exécuter le procédé de sauvegarde revendiqué, lorsque ces instructions sont exécutées par le microprocesseur.

L'invention a également pour objet un système de sauvegarde de données dans un réseau pair-à-pair.

Enfin, l'invention a également pour objet un noeud client pour le système de sauvegarde ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un système de sauvegarde de données dans un réseau pair-à-pair ;
- la figure 2 est un organigramme d'un procédé de sauvegarde mis en oeuvre dans le système de la figure 1 ;
- la figure 3 est un organigramme d'un procédé de mesure d'une bande passante montante mis en oeuvre dans le procédé de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

Chapitre I : Exemples de modes de réalisation

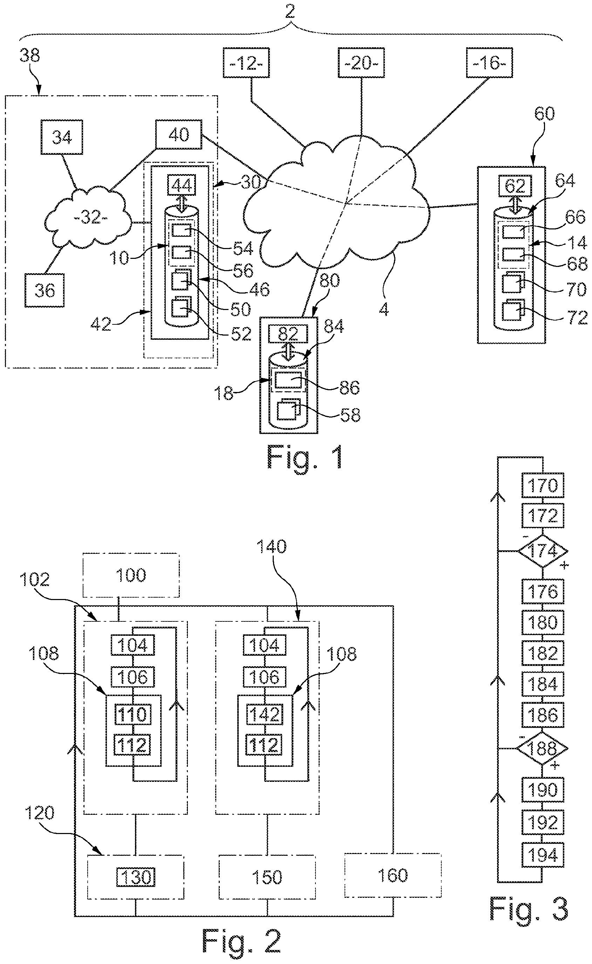

La figure 1 représente un système 2 de sauvegarde dans un réseau pair-à-pair. Le système 2 comporte des noeuds raccordés les uns aux autres par l'intermédiaire d'un réseau 4. Typiquement, le réseau 4 est un réseau grande distance de transmission d'informations, comme par exemple le réseau connu sous le nom de « Internet ». Dans un tel réseau, les liaisons sont établies entre les différents noeuds, par exemple, en utilisant la pile de protocole IP (« Internet Protocol »). Ainsi, les différents noeuds du système 2 peuvent être séparés les uns des autres par une très grande distance, c'est-à-dire supérieure à 100 km ou 1000 km.

Chaque noeud, également parfois appelé « pair » du réseau 4, est à la fois utilisé comme un client et un serveur. Chaque noeud correspond à un module logiciel implémenté et exécuté sur un calculateur électronique raccordé au réseau 4. Ici, on distingue principalement trois types de noeud, appelés respectivement, les noeuds clients, les noeuds de sauvegarde et les noeuds tiers. Typiquement, ces trois types de noeud sont implémentés sur chacun des calculateurs électroniques du système 2. Ainsi, un même calculateur électronique peut, en alternance ou simultanément, jouer le rôle d'un noeud client, d'un noeud de sauvegarde ou d'un noeud tiers. Toutefois, pour simplifier la description et la figure 1, chacun de ces types de noeud est décrit comme s'ils étaient implémentés sur des calculateurs électroniques différents des calculateurs électroniques sur lesquels sont implémentés les autres types de noeud.

Classiquement, le système 2 comporte un très grand nombre de noeud, c'est-à-dire habituellement plus de 500 ou 1000 ou 10000 noeuds. Le système 2 comporte donc un très grand nombre de chacun des types de noeud. Pour simplifier la figure 1, seuls deux noeuds clients 10 et 12, deux noeuds de sauvegarde 14 et 16 et deux noeuds tiers 18 et 20 sont représentés.

Ici, les noeuds clients sont identiques les uns aux autres et seul le noeud 10 est maintenant décrit plus en détail. Le noeud 10 est implémenté dans un dispositif 30 de stockage en réseau NAS (« Network Attached Storage »). Le dispositif 30 est raccordé à un réseau 32 auquel sont connectés différents équipements 34, 36 qui sauvegardent des données dans le dispositif 30. Typiquement, le réseau 32 est un réseau local installé dans un bâtiment 38 tel qu'une entreprise, une maison ou un appartement. Ce réseau local 32 est raccordé au réseau 4, dans cet exemple, par l'intermédiaire d'un routeur 40. Par exemple, la liaison entre le routeur 40 et le réseau 4 est une liaison ADSL ("Asymétrie Digital Subscriber Line") ou une liaison SDSL ("Symétrie Digital Subscriber Line"). Généralement, le routeur 40 traduit les adresses Internet locales utilisées sur le réseau 32 en adresses Internet globales routables sur le réseau 4. Ce service du routeur 40 est connu sous l'acronyme de NAT (« Network Address Translation »).

Ici, le dispositif 30 est raccordé au réseau 4 par l'intermédiaire du réseau local 32 et du routeur 40.

Les équipements 34 et 36 sont des équipements qui génèrent des fichiers qui doivent ensuite être sauvegardés sur le dispositif 30. Par exemple, il s'agit d'équipements multimédias tels qu'une caméra, un appareil photo, un smartphone, un ordinateur portable ou de bureau, ou tout autre équipement multimédia. Les différents équipements connectés au réseau 32 peuvent enregistrer un ou plusieurs fichiers dans le dispositif 30 en passant, par exemple, par l'intermédiaire du réseau 32.

Le dispositif 30 comporte un calculateur électronique 42. Le calculateur 42 comporte un microprocesseur 44 et une mémoire 46 raccordée au microprocesseur 44 par l'intermédiaire d'un bus de transmissions d'informations. Le microprocesseur 44 est apte à exécuter les instructions enregistrées dans la mémoire 46. La mémoire 46 comporte les instructions et les données nécessaires à l'exécution du procédé de la figure 2.

La mémoire 46 comporte notamment :

- des données prémiums 50 et des données 52 sans qualité de service garantie enregistrées dans cette mémoire 46 par les équipements 34 et 36, et
- les instructions du noeud client 10.

Dans ce mode de réalisation, on distingue deux types de données à sauvegarder appelées, respectivement, "données prémiums" et "données sans qualité de service garantie". Les données prémiums correspondent à des données bénéficiant d'une qualité de service garantie. Ici, la qualité de service est respectée lorsque le critère de qualité suivant est satisfait : un volume prédéterminé $VP_{maxt}$ de données prémiums sauvegardées dans le réseau pair-à-pair est restauré en une durée inférieure ou égale à une durée maximale $D_{maxt}$ prédéterminée. Cette qualité de service est garantie avec une probabilité Pt qu'elle soit respectée lorsque la fréquence des restaurations de données prémiums est de 1/T.

Autrement dit, sur la totalité des opérations de restauration d'un volume $VP_{maxt}$ de données prémiums ayant lieu sur la période T, une proportion supérieure à Pt se termine en moins de $D_{maxt}$. Formulé autrement, cela signifie que pour plus de Pt % des restaurations déclenchées pendant la période T, le critère de qualité est satisfait. Par la suite, les différentes valeurs numériques données permettent d'atteindre des probabilités Pt supérieure à 90% et fréquemment supérieure à 95%. Ici, la période T est choisie égale ou inférieure au temps moyen entre pannes habituellement observé pour un disque dur. Par exemple, la période T est inférieure à 5 ans ou 2 ans ou 1 an. Ici, la période T est égale à 400 jours. Le temps moyen entre pannes est également connu sous l'acronyme MTBF (« Mean Time Between Failures »).

La qualité de service garantie correspond à une bande passante montante bpmt minimale nécessaire pour télécharger les données prémiums sauvegardées dans le réseau pair-à-pair vers le noeud client. Par "bande passante montante" on désigne la vitesse de transfert des données depuis un noeud vers le réseau 4. Par exemple, dans un cas simple où un bit correspond à un baud, la bande passante bpmt est égale à $VP_{maxt}/D_{maxt}$.

Ici, les valeurs du volume $VP_{maxt}$ et de la durée $D_{maxt}$ sont choisies pour correspondre à une bande passante bpmt supérieure à 500 kbps ou 1000 kbps ou 5000 kbps. A titre d'illustration, ici, le critère de qualité est de 1To en 10 jours. Cela correspond à une bande passante bpmt de 9259 kbps si un bit correspond à un baud.

On notera que si la bande passante descendante du noeud client est inférieure à la bande passante bpmt, alors le critère de qualité ne peut pas être satisfait pour le volume $VP_{maxt}$ de données prémiums. La bande passante "descendante" est la vitesse de transfert de données en provenance du réseau 4 vers le noeud client. On suppose ici que chaque noeud client met à disposition du système 2 une bande passante descendante supérieure ou égale à la bande passante bpmt.

Par la suite, les valeurs du volume $VP_{maxt}$, de la durée $D_{maxt}$ et de la probabilité Pt sont accessibles à tous les noeuds clients du système 2.

A l'inverse des données prémiums, pour les données 52, la qualité de service n'est pas garantie. Ainsi, pour les données 52 le critère de qualité peut fréquemment ne pas être satisfait. Pour cette raison, les données prémiums 50 sont généralement des données plus importantes que les données 52. Les données sans qualité de service garantie sont également appelées classiquement données « best effort ».

Les instructions du noeud client 10 comportent notamment :

- les instructions d'un logiciel 54 de sauvegarde, et
- les instructions d'un module client 56 d'une base de données distribuée 58.

Lorsqu'il est exécuté par le microprocesseur 44, le logiciel 54 sauvegarde et, en alternance, restaure les données 50, 52 dans les noeuds de sauvegarde du système 2. Ici, le logiciel 54 est un logiciel de sauvegarde incrémentale, c'est-à-dire qu'à chaque sauvegarde, seules les données modifiées depuis la précédente sauvegarde sont sauvegardées dans le réseau pair-à-pair. Le fonctionnement du logiciel 54 est décrit plus en détail en référence aux figures 2 et 3. En particulier, le logiciel 54 est capable de s'adresser directement à chaque module d'un autre noeud du système 2. Pour cela, par exemple, un routage selon le protocole IPv6 est mis en oeuvre pour former un réseau privé virtuel entre les différents modules des différents noeuds implémentés dans le système 2.

Ici, la base de données distribuée 58 est une chaîne de blocs plus connue sous le terme anglais de « blockchain ». Ainsi, une fois qu'une information est enregistrée dans cette base de données 58, celle-ci n'est plus modifiable et n'est donc pas falsifiable. Par exemple, il s'agit d'une chaîne de blocs non-anonyme à permission. Ici, à titre d'illustration, la base de données 58 est implémentée dans les noeuds du système 2 en utilisant la technologie du projet HyperLedger de la fondation Linux. En particulier, la base de données 58 peut être réalisée en mettant en oeuvre les briques technologiques développées dans le cadre des sous-projets HyperLedger Fabric et HyperLedger Composer.

Lorsqu'il est exécuté par le microprocesseur 44, le module client 56 permet d'échanger avec un ou plusieurs modules serveurs de la base de données 58 afin d'enregistrer et, en alternance, de lire des informations dans cette base de données.

Les noeuds de sauvegarde sont par exemple identiques les uns aux autres et seul le noeud 14 est maintenant décrit plus en détail. Le noeud 14 est implémenté sur un calculateur électronique 60. Le calculateur électronique 60 comporte un microprocesseur 62 et une mémoire 64 raccordée au microprocesseur 62. Le microprocesseur 62 est apte à exécuter les instructions enregistrées dans la mémoire 64. A cet effet, la mémoire 64 comporte les instructions du noeud 14 et notamment :

- les instructions d'un module serveur 66 de sauvegarde,
- les instructions d'un module client 68 de la base de données 58.

Le module 68 est par exemple identique ou similaire au module 56.

Le module 66 est apte à sauvegarder dans la mémoire 64 des blocs de données transmis par le noeud client 10 et, en alternance, à transférer les blocs de données sauvegardés de sa mémoire 64 vers un noeud client. Dans cette description, les blocs de données sauvegardés correspondant aux données prémiums 50 sont appelés "blocs prémiums". Ces blocs prémiums sont dits "correspondre" aux données prémiums parce que c'est à partir de ces blocs prémiums que les données prémiums 50 peuvent être restaurées. Les blocs de données sauvegardés correspondant aux données 52 sont appelés blocs sans qualité de service garantie. Ici, la mémoire 64 comporte un espace 70 de stockage réservé au stockage des blocs prémiums et un espace 72 de stockage réservé au stockage des blocs sans qualité de service garantie. Les espaces 70 et 72 sont distincts et ne se chevauchent pas par exemple.

Les noeuds tiers sont par exemple identiques les uns aux autres et seul le noeud tiers 18 est décrit plus en détail. Le noeud 18 est implémenté sur un calculateur électronique 80. Ce calculateur électronique 80 comporte un microprocesseur 82 et une mémoire 84 raccordée au microprocesseur 82. Le microprocesseur 82 est apte à exécuter les instructions enregistrées dans la mémoire 84. A cet effet, la mémoire 84 comporte les instructions du noeud 18 et notamment les instructions d'un module serveur 86 de la base de données 58.

Le module serveur 86 est apte notamment à déterminer et à enregistrer des informations dans la base de données 58 en réponse à des requêtes des modules clients tels que les modules clients 56 et 68. Il est également apte à permettre la lecture des informations enregistrées dans la base de données 58 par tout noeud du système 2, et en particulier, par les noeuds clients.

La mémoire 84 comporte également une partie seulement de la base de données 58 qui est distribuée sur l'ensemble des noeuds tiers du système 2.

Comme représenté par des liaisons en pointillées visibles dans le réseau 4 de la figure 1, des liaisons de transmission d'informations relient directement entre eux les différents noeuds clients aux différents noeuds de sauvegarde. Pour cela, le routage mis en oeuvre entre ces noeuds clients et noeuds de sauvegarde est un routage direct. Par routage direct, on désigne ici le fait que les données échangées entre les noeuds clients et les noeuds de sauvegarde ne passent pas par l'intermédiaire d'un autre noeud de sauvegarde. Ainsi, chaque noeud client peut établir une liaison directe avec chaque noeud de sauvegarde du système 2 sans passer par l'intermédiaire d'un autre noeud de sauvegarde. Cela permet notamment à chaque noeud de sauvegarde de consacrer sa bande passante montante uniquement aux échanges de données entre lui-même et un ou plusieurs noeuds clients sans qu'une partie de cette bande passante soit consommée pour faire transiter des données d'un autre noeud de sauvegarde.

Le fonctionnement du système 2 va maintenant être décrit en référence au procédé des figures 2 et 3.

Initialement, lors d'une phase 100 d'initialisation, chaque nouveau noeud de sauvegarde qui est raccordé au réseau 4 déclare la valeur de sa bande passante montante $bpm_i$ qu'il réserve pour le système 2. Par la suite, l'indice i est l'identifiant du noeud de sauvegarde qui permet d'identifier sans ambiguïté ce noeud de sauvegarde parmi l'ensemble des noeuds de sauvegarde du système 2. Chaque nouveau noeud de sauvegarde déclare également un volume maximal $VPmax_i$ de sa mémoire 64 qu'il réserve au stockage des blocs pré-

miums. Le volume VPmax$_i$ correspond donc à la taille de l'espace 70 de stockage de ce noeud de sauvegarde i.

Éventuellement, lors de la phase 100, à chaque fois qu'un nouveau noeud de sauvegarde est raccordé au réseau 4, une phase d'échantillonnage, telle que la phase 160 décrite plus loin, est mise en oeuvre pour mettre à jour, dès la connexion de ce nouveau noeud de sauvegarde, sa bande passante bpm$_i$.

Lors d'une phase 102, le noeud client 10 sauvegarde les données prémiums 50 dans le réseau pair-à-pair. Par exemple, c'est l'utilisateur du dispositif 30 qui identifie lui-même les données stockées dans la mémoire 46 qui doivent être traitées comme des données prémiums et celles qui doivent être traitées comme des données sans qualité de service garantie. Lors de la phase 102, seules les données prémiums sont sauvegardées dans le réseau pair-à-pair.

Initialement, lors d'une étape 104, le logiciel 54 génère un fichier de sauvegarde incrémentale des données prémiums 50. Ce fichier comporte typiquement uniquement les données qui ont été modifiées depuis la dernière sauvegarde de ces données prémiums 50.

Ensuite, lors d'une étape 106, le logiciel 54 découpe le fichier de sauvegarde en n blocs prémiums. Ici, lors de l'étape 106, le logiciel 54 ajoute de la redondance aux données prémiums de manière à ce qu'en cas de perte ou de destruction de (n - k) blocs prémiums, il soit toujours possible de restaurer les données prémiums. Pour cela, par exemple, un codage de Reed-Salomon, noté RS(n, k), est utilisé, où n est un nombre entier positif et k est un nombre entier positif strictement inférieur à n.

Le nombre n est typiquement 10 ou 100 ou 1000 fois inférieur au nombre total de noeuds de sauvegarde du système 2.

Le nombre k est le nombre minimum de blocs prémiums à télécharger par le noeud client pour qu'il soit capable de restaurer le fichier de sauvegarde et donc les données prémiums contenues dans ce fichier. Il a été découvert qu'un nombre k élevée permettait d'obtenir une probabilité Pt élevée. Par exemple, ici, le nombre k est suffisamment grand pour que la condition (1) suivante soit vérifiée pour chaque noeud de sauvegarde : $(1-(D_{maxt}/T)^r)^k > \mu$, où :

- $\mu$ est une valeur supérieure ou égale à la probabilité Pt,
- $D_{maxt}$ est la durée maximale prédéterminée de restauration,
- le symbole "/" désigne l'opération de division,
- 1/T est la fréquence maximale des restaurations,
- r est défini par la relation suivante : r = E(bpm$_i$ x k/bpmt),
- la fonction E(bpm$_i$ × k/bpmt) est la fonction qui retourne la partie entière du produit bpm$_i$ × k/bpmt,
- bpm$_i$ est la bande passante montante réellement disponible mesurée pour le noeud de sauvegarde i,
- bpmt est la bande passante montante minimale requise pour satisfaire le critère de qualité;

- le symbole "x" désigne l'opération de multiplication.

La valeur $\mu$ est ici choisie supérieure à 0,9 ou 0,95. Par exemple, dans ce mode de réalisation, elle est égale à 0,95. Pour $\mu$ = 0, 95, le nombre k est supérieur à 3bpd/bpm$_i$, où bpd est la bande passante descendante du noeud client. Ici, k est supérieur ou égale à 40 et, souvent compris entre 40 et 100 ou entre 40 et 60.

Ici, le nombre n est compris entre 1,3k et 2,5k et, de préférence, compris entre 1,5k et 2k. Les nombres n et k sont, par exemple, enregistrés dans la base de données 58.

Par exemple, ici, le codage de Reed-Salomon utilisé est un codage RS(64, 40). Ainsi, pour être capable de restaurer le fichier sauvegardé dans le réseau pair-à-pair, il faut seulement télécharger quarante blocs prémiums sur les soixante quatre blocs prémiums enregistrés dans ce réseau pair-à-pair.

Lors d'une étape 108, le logiciel 54 enregistre les n blocs prémiums dans n noeuds de sauvegarde distincts du système 2. Par noeud de sauvegarde distinct, on désigne des noeuds de sauvegarde implémentés sur des calculateurs électroniques différents.

Pour cela, le logiciel 54 commence par sélectionner, lors d'une opération 110, les n noeuds de sauvegarde dans lesquels les n blocs prémiums vont être enregistrés en appliquant les règles 1) et 2) suivantes.

Règle 1) : Si par le passé l'étape 108 a déjà été exécutée et que l'espace de stockage prémium disponible EPD$_i$ sur chacun des n noeuds de sauvegarde précédemment sélectionnés est suffisant pour stocker les n nouveaux blocs prémiums à sauvegarder, alors le logiciel 54 sélectionne ces n noeuds de sauvegarde précédemment déjà utilisés.

L'espace de stockage prémium disponible, noté EPD$_i$, d'un noeud de sauvegarde i est défini par la relation suivante EPD$_i$= VPmax$_i$ - VPc$_i$, où :

- VPmax$_i$ est le volume maximum de blocs prémiums stockable dans la mémoire du noeud de sauvegarde i, et
- VPc$_i$ est le volume actuel ou courant de blocs prémiums déjà stockés dans la mémoire du noeud de sauvegarde i.

Le volume de stockage est typiquement exprimé en Kilo-octets ou dans toute autre unité standard de mesure similaire. Le volume VPmax$_i$ est défini par la relation suivante : VPmax$_i$ = k × bpm$_i$ × VP$_{maxt}$ / bpmt, où :

- bpm$_i$ est la bande passante montante mesurée pour le noeud de sauvegarde i, et
- VP$_{maxt}$, bpmt et k sont les mêmes que ceux précédemment définis.

La bande passante montante bpm$_i$ est calculée par le noeud client à partir d'informations enregistrées dans la base de données 58, comme cela sera décrit plus loin par la suite. Lors de l'opération 110, le noeud client calcule aussi les volumes $VPc_i$, $VPmax_i$ et l'espace $EPD_i$ à partir des données enregistrées dans la base de données 58.

Dans le cas d'une sauvegarde incrémentale, les nouveaux blocs prémiums sauvegardés sont liés aux précédents blocs prémiums sauvegardés. En effet, pour restaurer correctement les données prémiums, il faut télécharger aussi bien les nouveaux blocs prémiums que les précédents blocs prémiums sauvegardés. Ainsi, la perte ou la destruction des précédents blocs prémiums sauvegardés peut rendre impossible la restauration des données prémiums même si les nouveaux blocs prémiums sont correctement téléchargés à partir du réseau pair-à-pair. Dès lors, dans le cas d'une sauvegarde incrémentale, il n'y a pas de risque supplémentaire d'empêcher une restauration correcte des données prémiums si les nouveaux blocs prémiums sont sauvegardés en utilisant la même répartition sur les mêmes noeuds de sauvegarde que celle utilisée pour les précédents blocs prémiums. Par contre, le fait de sauvegarder tous les blocs prémiums d'une même sauvegarde incrémentale sur les mêmes n noeuds de sauvegarde maximise le temps moyen entre pannes. En effet, le temps moyen entre pannes diminue quand le nombre de noeuds de sauvegarde différents utilisés pour sauvegarder les blocs prémiums augmente.

Règle 2) : Si la règle 1) n'est pas applicable, alors le logiciel 54 sélectionne les n noeuds de sauvegarde ayant les indices de priorité $P_i$ les plus élevés.

L'indice de priorité $P_i$ d'un noeud de sauvegarde i est par exemple calculé à l'aide de la formule suivante : $P_i = bpm_i \times EPD_i / (VPmax_i \times NC_i)$, où :

- $bpm_i$, $EPD_i$, $VPmax_i$ sont les mêmes que précédemment définis, et
- $NC_i$ est le nombre de noeuds clients ayant sauvegardé des blocs prémiums dans l'espace 70 du noeud de sauvegarde i.

Le nombre $NC_i$ est par exemple obtenu à partir des informations enregistrées dans la base de données 58.

Le terme $bpm_i \times EPD_i / VPmax_i$ correspond à la bande passante montante encore disponible pour la restauration de données prémiums à partir du noeud de sauvegarde i. Ainsi, cet indice $P_i$ favorise la sélection des noeuds de sauvegarde qui ont la plus grande bande passante montante encore disponible. Plus un noeud de sauvegarde est fréquemment sélectionné, plus sa bande passante montante encore disponible diminue. Ainsi, cet indice $P_i$ tend à répartir uniformément la sauvegarde des blocs prémiums entre les différents noeuds de sauvegarde du système 2. De plus, si l'espace de stockage $EPD_i$ est nul ou très petit, l'indice $P_i$ est nul ou très petit ce qui empêche la sélection de ce noeud de sauvegarde. Le fait que l'indice $P_i$ diminue au fur et à mesure que le nombre $NC_i$ augmente, tend quant à lui à limiter le nombre de noeuds clients différents stockant des blocs prémiums sur un même noeud de sauvegarde. Cela réduit la probabilité de conflit entre restaurations simultanées.

On notera que les règles 1) et 2) inhibent systématiquement l'enregistrement de blocs prémiums dans un noeud de sauvegarde si cela conduit à dépasser son volume $VPmax_i$. Grâce à cela, le critère de qualité peut être satisfait.

Une fois que les n noeuds de sauvegarde ont été sélectionnés, lors d'une opération 112, chacun des n blocs prémiums est enregistré dans l'espace 70 de stockage d'un noeud de sauvegarde respectif choisi parmi ces n noeuds de sauvegarde sélectionnés. Ainsi, les n blocs prémiums sont enregistrés chacun sur un noeud de sauvegarde différent.

Typiquement, avant de transférer chaque bloc prémium vers le noeud de sauvegarde où il doit être enregistré, ce bloc prémium est chiffré avec une clé secrète appelée "clé client" et connue seulement du noeud client 10. Ainsi, les blocs prémiums enregistrés dans les noeuds de sauvegarde sont tous chiffrés avec cette clé client. Dès lors, seul le noeud client 10 est capable de déchiffrer ces blocs prémiums pour restaurer les données prémiums.

Par exemple, lors de l'opération 112, le logiciel 54 enregistre dans la base de données 58, par l'intermédiaire du module client 56, des informations publiques sur la sauvegarde qu'il a réalisée. Ici, ces informations publiques comportent :

- l'identifiant des n noeuds de sauvegarde utilisés,
- l'identifiant du noeud client 10,
- l'identifiant des blocs prémiums enregistrés sur chacun des noeuds de sauvegarde ainsi que, éventuellement, leur taille.

Ces informations publiques permettent notamment à chaque noeud client de calculer le nombre $NC_i$ et le volume $VPc_i$ lorsque cela est nécessaire.

Après l'opération 112, l'étape 108 est terminée et le procédé retourne à l'étape 104 pour procéder à la sauvegarde d'autres données prémiums dans le réseau pair-à-pair pour le même noeud client ou pour d'autres noeuds clients.

Après la phase 102 de sauvegarde, le noeud client 10 peut procéder à une phase 120 de restauration des données prémiums sauvegardées dans le réseau pair-à-pair. On notera que par rapport à un système de partage de fichiers dans un réseau pair-à-pair, ici, le noeud client 10 conserve normalement en permanence une copie dans sa mémoire 46 des données prémiums sauvegardées dans le réseau pair-à-pair. Ainsi, une restauration des données prémiums est généralement déclenchée uniquement en cas de perte ou d'endommagement de ces données prémiums dans la mémoire 46.

Lors de la phase 120, le logiciel 54 télécharge un ensemble complet de blocs prémiums à partir du réseau pair-à-pair pour permettre la restauration des données prémiums. Ici, l'ensemble complet comporte k blocs prémiums pour chaque fichier de sauvegarde. En effet, pour restaurer un fichier de sauvegarde, à cause de la redondance ajoutée lors de l'étape 106, il n'est pas nécessaire de télécharger les n blocs prémiums sauvegardés dans le réseau pair-à-pair mais seulement k d'entre eux.

Ainsi, lors de la phase 120, le logiciel 54 sélectionne uniquement k noeuds de sauvegarde parmi les n noeuds de sauvegarde utilisés pour sauvegarder des blocs prémiums. Pour cela, il sélectionne en priorité les noeuds de sauvegarde qui ne sont pas actuellement déjà utilisés pour restaurer des données prémiums. Par exemple, il sélectionne les k noeuds de sauvegarde ayant les indices $PR_i$ les plus élevés parmi les n noeuds de sauvegarde possibles. A titre d'illustration, ici, l'indice $PR_i$ associé à un noeud de sauvegarde i est défini par la relation suivante : $PR_i = bpm_i - \beta_i \times bpmt/k$, où :

- $bpm_i$, bpmt et k sont les mêmes que précédemment définis, et
- $\beta_i$ est le nombre de transferts de blocs prémiums actuellement en cours depuis ce noeud de sauvegarde i vers $\beta_i$ noeuds clients.

Le nombre $\beta_i$ est par exemple déterminé à partir des informations enregistrées dans la base de données 58.

Ici, lorsqu'un noeud de sauvegarde est simultanément impliqué dans plusieurs phase de restauration pour plusieurs noeuds clients, il partage à part égale sa bande passante montante entre ces différentes phase de restauration.

Cette sélection des k noeuds de sauvegarde en fonction de leur capacité à allouer à cette restauration une bande passante montante supérieure à bpmt/k, augmente substantiellement la probabilité Pt de satisfaire le critère de qualité. En effet, le seul cas où le critère de qualité ne pourrait pas être satisfait est le cas où il serait impossible de sélectionner k noeuds de sauvegarde capable d'allouer une bande passante montante supérieure à bpmdk à la restauration de données prémiums. Or, il a été observé que ce cas est extrêmement improbable dans le système 2 où le nombre de noeuds de sauvegarde est au moins 10 ou 100 fois supérieur au nombre k.

Lors de la restauration des données prémiums, chacun des k noeuds de sauvegarde alloue prioritairement sa bande passante montante au téléchargement des blocs de données prémiums. Puisque les k blocs prémiums sont téléchargés à partir de k noeuds de sauvegarde différents, ces k téléchargements sont exécutés en même temps et en parallèle. Une fois le téléchargement des k blocs prémiums terminés, le logiciel 54 reconstruit le fichier de sauvegarde.

Dans le cas d'une sauvegarde incrémentale, la restauration complète des données prémiums peut nécessiter la restauration de tous les fichiers de sauvegarde incrémentale générés, puis sauvegardés dans le réseau pair-à-pair.

Lors de la phase 120, une étape 130 de mesure de la bande passante montante $bpm_i$ réellement disponible pour chacun des k noeuds de sauvegarde sélectionnés est exécutée. Les opérations pour réaliser l'étape 130 sont imbriquées avec des opérations mises en oeuvre pour restaurer les données prémiums lors de la phase 120. Les opérations qui permettent à la fois de restaurer les données prémiums et de mesurer la bande passante $bpm_i$ sont décrites plus en détail dans le procédé de la figure 3.

Dans ce mode de réalisation, l'exécution de l'étape 130 est autorisée uniquement pour les noeuds de sauvegarde qui sont seulement impliqué dans une seule phase de restauration. Autrement, l'étape 130 n'est pas exécutée pour les noeuds de sauvegarde sélectionné qui sont simultanément impliqués dans plusieurs phases 120 de restauration pour plusieurs noeuds clients différents. En effet, cela simplifie et améliore la mesure de la bande passante $bpm_i$.

En alternance avec la phase 102, le logiciel 54 peut procéder à une phase 140 de sauvegarde des données 52. Par exemple, la phase 140 est identique à la phase 102 sauf que :

- les blocs prémiums sont remplacés par des blocs sans qualité de service garantie,
- l'opération 110 est remplacée par une opération 142, et
- les blocs 52 sont enregistrés dans l'espace 72 des noeuds de sauvegarde.

L'opération 142 est identique à l'opération 110, sauf que les règles 1) et 2) sont remplacées, par exemple, par les règles 3) et 4) suivantes.

Règle 3) : Si par le passé, l'étape 108 a déjà été exécutée et que l'espace 72 de stockage disponible sur chacun des n noeuds de sauvegarde précédemment sélectionnés est suffisant pour enregistrer les nouveaux blocs sans qualité de service garantie, alors le logiciel 54 sélectionne les n noeuds de sauvegarde précédemment utilisés pour stocker les précédents n blocs sans qualité de service garantie.

Règle 4) : Si la règle 3) n'est pas applicable, alors le logiciel 54 sélectionne les n noeuds de sauvegarde ayant les plus grands espaces 72 de stockage encore disponibles pour enregistrer les nouveaux blocs sans qualité de service garantie.

Après la phase 140, le noeud client 10 peut exécuter une phase 150 de restauration des données 52. La phase 140 est par exemple identique à la phase 120 sauf que :

- elle ne comporte pas l'étape 130 de mesure de la bande passante montante, et
- en cas de restauration simultanée à partir d'un même noeud de sauvegarde de blocs prémiums et de blocs sans qualité de service garantie, le noeud de sauvegarde alloue sa bande passante montante prioritairement au téléchargement des blocs prémiums au détriment de la bande passante allouée pour le téléchargement des blocs sans qualité de service garantie.

Dès que des blocs prémiums ont été sauvegardés sur des noeuds de sauvegarde par un noeud client, le noeud client peut déclencher une phase 160 d'échantillonnage pour mettre à jour la bande passante $bpm_i$ d'un ou plusieurs noeuds de sauvegarde en dehors des périodes de temps où la phase 120 est exécutée. Au préalable, si aucun bloc prémium n'est déjà enregistré dans l'espace 70, avant d'exécuter la phase 160, le noeud client enregistre dans cet espace 70 de stockage prémium un ou plusieurs blocs prémiums nécessaires pour l'exécution de la phase 160.

La phase 160 est, par exemple, identique à l'étape 130 sauf que seule un ensemble réduit de blocs prémiums enregistrés dans les espaces 70 des noeuds de sauvegarde est téléchargé. Cet ensemble réduit de blocs prémiums téléchargé est trop petite pour permettre la restauration complète des données prémiums. Typiquement, la taille de cet ensemble réduit de blocs prémiums téléchargé lors de la phase 160 est inférieure à $10^{-3} \times EP_{10}$ ou $10^{-4} \times EP_{10}$, où $EP_{10}$ est égal à la taille de l'ensemble complet de blocs prémiums nécessaires pour restaurer les données prémiums.

Ainsi, la phase 160 peut être exécutée beaucoup plus rapidement que l'étape 130 puisque la quantité de données à télécharger pour mesurer la bande passante $bpm_i$ du noeud de sauvegarde i est $10^{-3}$ ou $10^{-4}$ fois inférieure à la quantité de données téléchargées lors de l'étape 130. La phase 160 permet donc de mettre à jour les bandes passantes $bpm_i$ plus fréquemment que l'étape 130.

Dans le système 2, le noeud client 10 conserve normalement une copie des données sauvegardées dans sa mémoire 46. Ainsi, dans ce mode de réalisation, dès qu'un bloc de données sauvegardé dans le réseau pair-à-pair est perdu ou endommagé, le noeud 10 reconstruit immédiatement ce bloc perdu ou endommagé est le sauvegarde à nouveau dans le réseau pair-à-pair. Dès lors, en pratique, les n blocs de données sauvegardés sont presque toujours disponibles dans le réseau pair-à-pair. Cela maximise le nombre de choix possibles pour les k noeuds de sauvegarde à partir desquels doivent être téléchargés les k blocs lors de la phase 120 ou 150 de restauration. Pour détecter qu'un bloc de données est perdu ou endommagé, par exemple, le noeud 10 compare à intervalle régulier une signature des données sauvegardées dans sa mémoire avec une signature des blocs de données sauvegardés dans le réseau pair-à-pair. Les signatures comparées sont par exemple obtenues en appliquant une fonction de hachage, connue sous le terme anglais de "hash", aux blocs de données sauvegardés dans le réseau pair-à-pair et aux blocs de données obtenus à partir des données correspondantes enregistrées dans la mémoire 46.

La figure 3 représente plus en détail un exemple de réalisation de la phase 120 et de l'étape 130. Les étapes qui suivent sont décrites dans le cas particulier des échanges entre le noeud client 10 et un noeud de sauvegarde i à partir duquel un bloc prémium est téléchargé par ce noeud client 10. Toutefois, de préférence, ces étapes sont réalisées pour tous les k noeuds de sauvegarde à partir desquels le noeud client 10 télécharge des blocs prémiums.

Initialement, lors d'une opération 170, le logiciel 54 du noeud client 10 envoie, par l'intermédiaire du module client 56, une requête de début de téléchargement à l'un des noeuds tiers. Par la suite, la description est faite dans le cas particulier où le noeud tiers est le noeud tiers 80. Cette requête contient typiquement l'identifiant du noeud de sauvegarde i, l'identifiant du noeud client 10 et l'identifiant du ou des blocs prémiums à télécharger à partir de l'espace 70 de stockage du noeud de sauvegarde i.

Dans ce mode de réalisation, on suppose que la base de données 58 contient déjà les informations nécessaires pour déterminer la taille des blocs prémiums à partir de leurs identifiants. Si ce n'est pas le cas, alors la requête de début de téléchargement contient en plus la taille de chacun des blocs prémiums à télécharger et cette taille est aussi enregistrée dans la base de données 58 par le noeud tiers 80.

Lors d'une opération 172, le noeud tiers 80 enregistre les différentes informations reçues dans la base de données 58 puis transmet cette requête de début de téléchargement au noeud de sauvegarde i.

En réponse, lors d'une opération 174, sauf cas très particulier, le noeud de sauvegarde i indique au noeud tiers 80 qu'il accepte de transférer les blocs prémiums identifiés vers le noeud client 10. Le noeud tiers 80 enregistre dans la base de données 58 que le transfert est accepté et indique au noeud client 10 que ce transfert a été accepté. Dans ce cas, tout téléchargement en cours de bloc sans qualité de service garantie à partir du noeud de sauvegarde i est immédiatement interrompu pour allouer la totalité de la bande passante $bpm_i$ au téléchargement des blocs prémiums. Le téléchargement des blocs sans qualité de service garantie sera par exemple repris automatiquement à l'issue de la phase 120.

Si le transfert des blocs prémiums est accepté, lors d'une opération 176, le noeud client transmet directement au noeud de sauvegarde i une requête de chargement des blocs prémiums à partir de ce noeud de sauvegarde. Cette requête est par exemple une requête conforme au protocole HTTP. Lors de cette opération 176, il transmet en même temps au noeud tiers une demande de début de téléchargement.

En réponse à cette demande de début de téléchargement, lors d'une opération 180, le noeud tiers 80 enregistre dans la base de données 58 l'instant de réception de cette demande de début de téléchargement comme étant l'instant $t_d$ de début de téléchargement. Immédiatement après cet enregistrement ou en même temps, le noeud tiers 80 indique au noeud de sauvegarde i qu'il peut débuter le transfert des blocs prémiums vers le noeud client 10. Par exemple, pour cela, le noeud tiers 80 transmet au noeud de sauvegarde i la demande de début de téléchargement reçue.

Lors d'une opération 182, le noeud de sauvegarde transfère le ou les blocs prémiums vers le noeud client 10. Le noeud de sauvegarde commence ce transfert uniquement après avoir reçu la demande de début de téléchargement transmise par le noeud tiers 80. Le transfert des blocs prémiums du noeud de sauvegarde vers le noeud client 10 se fait par l'intermédiaire d'une liaison directe entre ces deux noeuds. Lors du transfert des blocs prémiums vers le noeud 10, le noeud de sauvegarde chiffre, par exemple à la volée, les blocs prémiums transférés vers le noeud 10 avec une clé de chiffrement secrète appelée "clé de sauvegarde" et inconnue du noeud 10. Ainsi, à ce stade, les blocs prémiums téléchargés par le noeud 10 sont chiffrés deux fois, une fois avec sa clé client et une fois avec la clé de sauvegarde. Ainsi, à ce stade, les blocs prémiums téléchargés sont inutilisables par le noeud 10.

Lorsque le transfert de tous les blocs prémiums vers le noeud 10 est terminé, lors d'une opération 184, le noeud de sauvegarde indique directement au noeud 10 que ce transfert est terminé.

Lors de cette opération 184, en réponse, le noeud 10 envoie au noeud de sauvegarde une requête pour obtenir la clé de sauvegarde lui permettant de déchiffrer les blocs prémiums transférés. Par exemple, cette requête est une requête HTTP. En même temps, le noeud 10 transmet au noeud tiers 80 une déclaration de fin de téléchargement.

Lors d'une opération 186, en réponse à cette déclaration de fin de téléchargement, le noeud tiers 80 enregistre l'instant de réception de cette déclaration en tant qu'instant $t_f$ de fin de téléchargement dans la base de données 58. Ainsi, dans ce mode de réalisation, c'est le noeud tiers qui mesure les instants $t_d$ et $t_f$ et non pas les noeuds client et de sauvegarde.

En même temps, il indique au noeud de sauvegarde qu'il a reçu la déclaration de fin de téléchargement. Par exemple, pour cela, le noeud tiers 80 transfert immédiatement la déclaration de fin de téléchargement au noeud de sauvegarde.

En réponse à la réception de la déclaration de fin de téléchargement, lors d'une opération 188, le noeud de sauvegarde compare à un seuil prédéterminé $S_1$ l'écart entre l'instant où il a reçu cette déclaration de fin de téléchargement et l'instant où le téléchargement s'est réellement terminé. Par exemple, l'instant où le téléchargement s'est réellement terminé est l'instant où il a informé le noeud 10 que le transfert des blocs prémiums était terminé.

Si cet écart est inférieur au seuil $S_1$, lors d'une opération 190, le noeud de sauvegarde transmet directement au noeud client 10 la clé de sauvegarde nécessaire pour déchiffrer les blocs prémiums téléchargés par le noeud 10. Dans le cas contraire, il provoque le marquage de l'instant $t_f$ de fin de téléchargement enregistré dans la base de données 58 comme étant invalide. Par exemple, pour cela, dans ce mode de réalisation, le noeud de sauvegarde ne transmet pas la clé de sauvegarde au noeud 10.

Uniquement s'il reçoit la clé de sauvegarde, lors d'une opération 192, le noeud 10 transmet une requête de validation du téléchargement au noeud tiers 80.

Lors d'une opération 194, en réponse à la réception de cette requête de validation, le noeud tiers enregistre dans la base de données 58 que l'instant $t_f$ de fin de téléchargement enregistré est valide.

Si la requête de validation n'est pas reçue, l'instant $t_f$ de fin de téléchargement est marqué comme étant invalide. Ainsi, en s'abstenant de transmettre la clé de sauvegarde au noeud 10, le noeud de sauvegarde provoque le marquage de l'instant de fin de téléchargement comme étant invalide.

Les informations enregistrées dans la base de données 58 sont consultables par tous les noeuds clients du système 2. Ainsi, à partir des instants $t_d$, $t_f$ et de l'identifiant des blocs prémiums téléchargés et de l'identifiant du noeud de sauvegarde, tout noeud client est capable de mesurer la bande passante $bpm_i$ pour le noeud de sauvegarde i. Par exemple, pour cela, dans l'hypothèse où un bit est égal à un baud, la bande passante $bpm_i$ est calculée à l'aide de la relation suivante : $bpm_i = VP/(tf - t_d)$, où VP est la taille des blocs prémiums téléchargés entre les instants $t_d$ et $t_f$.

Si, dans la base de données 58, le transfert des blocs prémiums est marqué comme n'ayant pas été accepté ou si l'instant $t_f$ est marqué comme invalide, la mesure de la bande passante $bpm_i$ à partir de ces données enregistrées dans la base de données 58 est interdite. Dans ce cas, ces données marquées comme invalides sont systématiquement ignorées par les noeuds clients et ne sont jamais prises en compte pour le calcul d'une bande passante $bpm_i$.

De préférence, le système 2 interdit l'enregistrement de données prémiums dans un noeud de sauvegarde tant qu'aucune mesure valide de sa bande passante $bpm_i$ n'est disponible. Par exemple, cela interdit de sauvegarder des blocs prémiums sur un noeud de sauvegarde qui provoquerait systématiquement le marquage de l'instant $t_r$ comme étant invalide.

Chapitre II : Variantes :

Variantes de la mesure de la bande passante $bpm_i$ :

Dans des cas particuliers où les noeuds de sauvegarde et/ou le noeud client sont des noeuds fiables, alors les mesures des instants $t_d$ et $t_f$ sont réalisées par le noeud client et/ou le noeud de sauvegarde. Dans un tel mode de réalisation, ce n'est pas le noeuds tiers qui mesure les instants $t_d$ et $t_f$.

Dans un autre mode de réalisation, la bande

passante bpm$_i$ est directement enregistrée dans la base de données 58. Dans ce dernier cas, les informations utilisées pour calculer cette bande passante bpm$_i$ peuvent ne pas être enregistrées dans la base de données 58.

Le chiffrement, par le noeud de sauvegarde, des blocs prémiums transférés vers le noeud client lors de la mesure de la bande passante bpm$_i$ peut être omis dans un mode de réalisation simplifié.

La possibilité de marquer l'instant t$_f$ comme étant invalide peut aussi être omise.

Dans un autre mode de réalisation, l'interdiction d'autres téléchargements de blocs prémiums par d'autres noeuds clients pendant la mesure de la bande passante bpm$_i$ est omis. Dans ce cas, la mesure de la bande passante bpm$_i$ peut être moins fiable dans les rares cas où le même noeud de sauvegarde est simultanément impliqué dans plusieurs phase 120 de restauration.

Dans une mode de réalisation particulier de la phase 120 de restauration, si un autre téléchargement de blocs prémiums est déjà en cours à partir d'un des noeuds de sauvegarde sélectionné, lors de l'opération 174, ce noeud de sauvegarde indique au noeud tiers 80 que le transfert est refusé. Le refus du transfert est alors enregistré dans la base de données 58 par le noeud tiers 80. Puis le noeud tiers 80 indique ce refus au noeud client 10. En réponse, le noeud client 10 interrompt la restauration demandée et renverra plus tard une nouvelle requête de début de téléchargement. Dans ce mode de réalisation particulier, un noeud de sauvegarde ne peut pas être impliqué simultanément dans plusieurs phases 120 de restauration.

Dans un mode de réalisation particulier, dans le cas où une première et une seconde exécutions de la phase 120, respectivement, par un premier et un second noeuds clients, se chevauchent temporellement et conduisent à télécharger des blocs prémiums à partir d'un même noeud de sauvegarde i, alors ces deux exécutions sont réalisées en parallèle. Dans ce cas, la bande passante montante du noeud de sauvegarde i est partagée entre ces deux exécutions de la phase 120. La bande passante montante bpm$_i$ est alors calculée en prenant en compte les données enregistrées dans la base de données 54 à la fois lors des première et seconde exécutions de la phase 120 qui se chevauchent. En effet, à partir des instants t$_d$ et t$_f$ de téléchargement enregistrés lors des première et seconde exécutions de la phase 120, il est possible de déterminer précisément le début et la fin de l'intervalle de temps pendant lequel les deux exécutions se chevauchent. Ainsi, à partir des informations enregistrées dans la base de données 58 lors des première et seconde exécutions de la phase 120, il est possible de calculer correctement la bande passante bpm$_i$. Par exemple, pour cela, dans le cas où la première exécution de la phase 120 débute avant la seconde exécution de la phase 120, alors le système d'équations suivant est résolu :

$$V_1 = bpm_{1,1}(t_{d2} - t_{d1}) + bpm_{1,2}(t_{f1} - t_{d2}),$$

$$V_2 = bpm_{2,1}(t_{f1} - t_{d2}) + bpm_{2,2}(t_{f2} - t_{f1}),$$

$$bpm_{2,2} = bpm_{1,1},$$

$$bpm_{1,2} = bpm_{2,1}$$

où :

- t$_{d1}$ et t$_{d2}$ sont les instants de début de téléchargement enregistrés dans la base de données 58 par, respectivement, les première et seconde exécutions de la phase 120,
- t$_{f1}$ et t$_{f2}$ sont les instants de fin de téléchargement enregistrés dans la base de donnés 58 par, respectivement, les première et seconde exécutions de la phase 120,
- V$_1$ et V$_2$ sont les tailles des blocs prémiums téléchargés pendant, respectivement, les première et seconde exécutions de la phase 120,
- bpm$_{1,1}$ est la bande passante montante pendant l'intervalle [t$_{d1}$;t$_{d2}$],
- bpm$_{2,2}$ est la bande passante montante pendant l'intervalle [t$_{f1}$;t$_{f2}$],
- bpm$_{1,2}$ et bpm$_{2,1}$ sont les bandes passantes montantes consacrées au téléchargement, respectivement, des volumes V$_1$ et V$_2$ de blocs prémiums pendant l'intervalle [t$_{d2}$;t$_{f1}$] où ces deux téléchargements se chevauchent.

Pour construire ce système d'équations, on a utilisé le fait que pendant l'intervalle [t$_{d2}$;t$_{f1}$], la bande passante montante est partagée à part égale entre les première et seconde exécutions de la phase 120.

Une fois que ce système d'équations est résolu, la mesure de la bande passante bpm$_i$ est prise égale à bpm$_{1,1}$ ou à bpm$_{2,2}$.

En variantes, la base de données utilisée pour sauvegarder les informations permettant de mesurer la bande passante bpm$_i$ est une chaîne de blocs anonymes ou toute autre base de données susceptible de garantir la fiabilité des informations qu'elle contient.

L'étape 130 n'est pas nécessairement exécutée systématiquement à chaque fois que la phase 120 est exécutée. En variantes, elle est uniquement exécutée lors de certaines exécutions de la phase 120 de restauration.

D'autres modes de réalisation sont possibles pour indiquer au noeud de sauvegarde que la demande de début ou la déclaration de fin de téléchargement a été reçue par le noeud tiers. Par exemple, au lieu de transférer cette demande ou déclaration au noeud de sauvegarde, le noeud de sauvegarde est programmé pour consulter fréquemment la base de données 58 afin de repérer immédiatement l'enregistrement de l'instant $t_d$ ou $t_f$ dans cette base de données.

L'instant $t_f$ peut être marqué comme étant invalide par d'autres moyens. Par exemple, en variantes, le noeud de sauvegarde envoie au noeud tiers une requête d'invalidation de l'instant $t_f$. En réponse, le noeud tiers marque dans la base de données 58 que l'instant $t_f$ est invalide.

En variantes, lors de la phase d'échantillonnage 160, les blocs prémiums téléchargés à partir du noeud de sauvegarde sont des blocs prémiums enregistrés dans ce noeud de sauvegarde par d'autres noeuds clients ou préenregistrés dans le noeud de sauvegarde par tout autre moyen. Dans ce cas, les blocs prémiums téléchargés sont chiffrés avec une clé inconnue du noeud client et, après les avoir téléchargé, le noeud client ne peut pas les exploiter.

En variantes, la phase 160 d'échantillonnage est omise. Dans un autre mode de réalisation, à l'inverse, la mesure de la bande passante $bpm_i$ est uniquement réalisée lors de la phase 160.

Variantes du système 2 :

En variantes, le routage direct des blocs prémiums et/ou des blocs sans qualité de service garantie est omis. Dans ce cas, les blocs prémiums ou les blocs sans qualité de service garantie téléchargés à partir d'un noeud de sauvegarde peuvent traverser un ou plusieurs autres noeuds de sauvegarde avant d'atteindre le noeud client de destination.

L'utilisation d'un routeur 40 pour raccorder le noeud client 10 au réseau 4 peut être omise, par exemple, s'il n'est pas nécessaire de traduire une adresse Internet locale ou une adresse Internet globale. Cela peut être le cas si un adressage IPv6 est utilisé.

En variantes, l'équipement qui génère les fichiers à enregistrer dans le dispositif 30 est directement connecté au dispositif 30, par exemple, par l'intermédiaire d'un port USB (« Universal Serial Bus »). Dans ce cas, le réseau local 32 peut être omis.

La qualité de service garantie peut aussi être directement exprimée sous la forme de la bande passante montante minimum bpmt garantie pour la restauration des données prémiums à partir du réseau pair-à-pair.

Le noeud client peut être implémenté dans d'autres dispositifs qu'un dispositif de stockage en réseau NAS. Par exemple, le noeud 10 est implémenté dans un ordinateur ou dans l'un des équipements multimédias 34, 36.

Dans un mode de réalisation particulier, plusieurs noeuds de sauvegarde sont implémentés sur un même calculateur électronique.

Autres variantes du procédé de sauvegarde :

D'autres méthodes de codage que le codage de Reed-Salomon existent pour ajouter de la redondance aux données sauvegardées. Par exemple, toute méthode consistant à ajouter un code correcteur d'effacement peut convenir. Cette famille de méthodes est connue sous l'acronyme ECC (« Error-Correcting Code »). Par exemple, on peut citer comme alternatives au code de Reed-Salomon, le code ZFEC du projet Tahoe-LAFS, ou le code Parchives. Une autre méthode pour ajouter la redondance nécessaire aux données sauvegardées consiste simplement à dupliquer les blocs de données sauvegardés.

Dans un mode de réalisation simplifié, aucun bloc de redondance n'est ajouté lors de l'étape 106. Dans ce cas, les nombres n et k sont égaux.

D'autres modes de réalisation de l'indice de priorité $P_i$ sont possibles. Par exemple, dans un mode de réalisation simplifié, l'indice $P_i$ est indépendant du nombre $NC_i$ de noeuds clients ayant déjà sauvegardé des blocs prémiums sur ce noeud de sauvegarde. Dans un autre mode de réalisation très simplifié, l'indice $P_i$ dépend seulement de l'espace $EPD_i$.

D'autres règles de sélection des noeuds de sauvegarde lors de l'opération 110 sont utilisables. Par exemple, dans un mode de réalisation simplifié, la règle 1) est omise. En variantes, une règle supplémentaire peut être ajoutée. Par exemple, la règle 5) suivante peut être ajoutée.

Règle 5) : si la règle 1) n'est pas applicable car l'espace $EPD_i$ sur le noeud de sauvegarde i n'est pas suffisant, alors le noeud de sauvegarde i est contacté pour qu'il augmente, si possible, sa bande passante $bpm_i$ et donc son volume $VPmax_i$. Dans le cas où le noeud de sauvegarde i augmente suffisamment son volume $VPmax_i$, alors la règle 1) est appliquée. Dans le cas contraire, où le noeud de sauvegarde i n'augmente pas suffisamment son volume $VPmax_i$, la règle 3) n'est pas applicable. Dans cette variante, la règle 2) est modifiée pour s'appliquer si la règle 1) et la règle 3) ne sont pas applicables.

En variante, dans un mode de réalisation particulier, la sauvegarde de données sans qualité de service garantie est omise.

Le logiciel 54 n'est pas nécessairement un logiciel de sauvegarde incrémentale. Par exemple, il peut s'agir d'un logiciel de sauvegarde différentiel ou d'un logiciel de sauvegarde complète.

L'identification des données sauvegardées comme étant soit des données prémiums, soit des données sans qualité de service garantie, peut être réalisée automatiquement, par exemple, en fonction de l'extension des fichiers sauvegardés.

L'utilisation de la bande passante montante encore disponible pour tendre vers une répartition uniforme des blocs prémiums sur les différents noeuds de sauvegarde peut être mise en oeuvre indépendamment de l'interdiction d'enregistrer des blocs prémiums sur un noeud de sauvegarde si cela conduit à dépasser le volume $VPmax_i$. Par exemple, cela peut être mis en oeuvre dans un procédé de sauvegarde de données dans un réseau pair-à-pair dans lequel, l'enregistrement de blocs prémiums dans un noeud de sauvegarde i au-delà du volume VPmax$_i$ est autorisé. Cela peut aussi être mis en oeuvre dans un procédé de sauvegarde où le volume VPmax$_i$ est déterminé sans prendre en compte la bande passante bpm$_i$ mesurée.

Le choix d'un nombre k qui vérifie la condition (1) peut aussi être mis en oeuvre indépendamment de l'interdiction d'enregistrer des blocs prémiums sur un noeud de sauvegarde si cela conduit à dépasser le volume VPmax$_i$. Par exemple, cela peut être mis en oeuvre dans un procédé de sauvegarde de données dans un réseau pair-à-pair dans lequel, l'enregistrement de blocs prémiums dans un noeud de sauvegarde i au-delà du volume VPmax$_i$ est autorisé. Cela peut aussi être mis en oeuvre dans un procédé de sauvegarde où le volume VPmax$_i$ est déterminé sans prendre en compte la bande passante bpm$_i$ mesurée.

Chapitre III : Avantages des modes de réalisation décrits :

Les modes de réalisation décrits permettent d'améliorer la qualité de service. En effet, la mesure de la bande passante montante bpm$_i$ disponible pour chaque noeud de sauvegarde permet d'obtenir cette information sans avoir recours, par exemple, aux déclarations d'un administrateur du noeud de sauvegarde. Ainsi, l'information sur la bande passante bpm$_i$ est plus fiable que si elle était simplement déclarée par l'administrateur du noeud de sauvegarde. De plus, elle peut être mise à jour automatiquement et régulièrement. Puisque l'information sur la bande passante bpm$_i$ est plus fiable, le risque d'enregistrer un bloc prémium dans un noeud de sauvegarde qui n'aurait pas la bande passante bpm$_i$ suffisante pour satisfaire le critère de qualité est faible. Cela augmente donc la probabilité Pt et la fiabilité du procédé de sauvegarde.

Le fait que les instants de début et de fin de téléchargement soient mesurés et enregistrés dans la base de données 58 par des noeuds tiers rend très difficile pour le noeud de sauvegarde de falsifier la mesure de la bande passante bpm$_i$. De même, cela rend très difficile la falsification de ces instants par un noeud client. Cela améliore donc la fiabilité de la mesure de la bande passante bpm$_i$ et donc la fiabilité du procédé de sauvegarde.

Le fait de chiffrer les blocs prémiums transmis au noeud client et de fournir la clé de sauvegarde uniquement lorsque la déclaration de fin de téléchargement a été transmise par le noeud tiers au noeud de sauvegarde oblige le noeud client à déclarer la fin du téléchargement. En effet, tant que le noeud client n'a pas déclaré la fin du téléchargement, il ne peut pas recevoir la clé de sauvegarde et ne peut donc pas utiliser les blocs prémiums téléchargés. Cela évite donc qu'un noeud client puisse télécharger un bloc prémium à partir d'un noeud de sauvegarde sans que cela puisse être utilisé pour mesurer la bande passante bpm$_i$ de ce noeud de sauvegarde i. Ainsi, chaque restauration correspond à une mesure de la bande passante bpm$_i$ du noeud de sauvegarde i. Les mesures des bandes passantes bpm$_i$ sont donc mises à jour fréquemment, ce qui améliore la fiabilité du procédé de sauvegarde.

Le fait que le noeud de sauvegarde puisse marquer l'instant de fin de téléchargement enregistré dans la base de données 58 comme étant invalide permet d'éviter qu'un instant t$_f$ falsifié par le noeud client soit pris en compte pour le calcul de la bande passante bpm$_i$ du noeud de sauvegarde i. En effet, le noeud client peut retarder la transmission de la déclaration de fin de téléchargement. En faisant cela et en absence de possibilité de marquer l'instant t$_f$ comme étant invalide, cela conduirait à calculer une bande passante bpm$_i$ pour le noeud de sauvegarde i erronée. Ainsi, ce chiffrement améliore la fiabilité du procédé de sauvegarde en rendant plus difficile la falsification de l'instant t$_f$.

La mise en oeuvre de la phase d'échantillonnage entre deux phases de restauration permet de mettre à jour la mesure de la bande passante bpm$_i$ plus fréquemment sans pour autant télécharger un ensemble complet de blocs prémiums sauvegardés dans les noeuds de sauvegarde. Ainsi, la mesure de la bande passante bpm$_i$ consomme beaucoup moins de bande passante que lorsque cette mesure est réalisée lors de l'étape 130. Cela permet donc la mise à jour plus fréquente de la bande passante bpm$_i$ tout en limitant la bande passante consommée pour faire cela. Cela améliore les performances et la fiabilité du procédé de sauvegarde.

Le fait que la base de données soit une chaîne de blocs permet de rendre très difficile la falsification des informations enregistrées dans cette base de données 58. Cela participe également à rendre le procédé de sauvegarde plus fiable.

Le fait de permettre la sauvegarde de données sans qualité de service garantie permet d'optimiser l'usage de la bande passante montante des noeuds de sauvegarde. En effet, en absence de restauration de blocs prémiums, la bande passante montante des noeuds de sauvegarde ne reste pas nécessairement inutilisée mais peut, au contraire, être utilisée pour restaurer des données sans qualité de service garantie.

Le fait d'utiliser un routage direct entre le noeud client et un premier noeud de sauvegarde élimine les situations ou une partie de la bande passante montante du premier noeud de sauvegarde est utilisée pour transférer des informations d'un second noeud de sauvegarde vers un noeud client. En effet, cette situation où le premier noeud de sauvegarde est traversé par des blocs prémiums téléchargés depuis le second noeud de sauvegarde réduit la bande passante de ce premier noeud de sauvegarde. Or, si cette réduction de la bande passante du premier noeud de sauvegarde intervient pendant la mesure de sa bande passante bpm$_i$, cette mesure est

faussée. Ainsi, en utilisant un routage direct, on améliore la fiabilité de la mesure de la bande passante $bpm_i$ et donc la fiabilité du procédé de sauvegarde.

Le fait d'utiliser l'indice de priorité $P_i$ qui augmente quand la bande passante montante encore disponible augmente permet de tendre vers une répartition uniforme des blocs prémiums sur l'ensemble des noeuds de sauvegarde du réseau pair-à-pair.

Le fait que l'indice $P_i$ décroît quand le nombre $NC_i$ de noeuds clients augmente permet de limiter le nombre de noeuds clients différents enregistrant des blocs prémiums sur un même noeud de sauvegarde. Cela augmente le temps moyen entre panne.

Le fait d'interdire d'autres téléchargements pendant la mesure de la bande passante $bpm_i$ permet de simplifier cette mesure.

Le fait de choisir le nombre k tel que pour tous les noeuds de sauvegarde sélectionnés par le noeud client pour y sauvegarder des blocs prémiums, la condition (1) soit vérifiée, permet d'obtenir une qualité de service garantie avec un probabilité Pt supérieure à 90%.

Le fait d'interdire l'enregistrement de blocs prémiums dans un noeud de sauvegarde pour lequel on ne dispose pas d'une mesure valide de sa bande passante $bpm_i$ améliore aussi la fiabilité du procédé de sauvegarde.

## Revendications

**1.** Procédé de sauvegarde de données dans un réseau pair-à-pair, ce procédé comportant les étapes suivantes :

     a) l'exécution (104) par un noeud client du réseau pair-à-pair, d'un logiciel de sauvegarde pour générer un fichier de sauvegarde à partir duquel les données sauvegardées peuvent être restaurées,
     b) le découpage (106) du fichier de sauvegarde généré en plusieurs blocs de données, et
     c) l'enregistrement (108) des blocs de données dans la mémoire de différents noeuds de sauvegarde du réseau pair-à-pair,

     **caractérisé en ce que** les données sont des données prémiums bénéficiant d'une qualité de service garantie, cette qualité de service correspondant à un volume prédéterminé de données premium restaurable à partir du réseau pair-à-pair en une durée maximale prédéterminée de restauration, ce procédé comportant à cet effet :

     - le téléchargement (182) par un noeud client du réseau pair-à-pair d'un ensemble d'un ou plusieurs bloc prémiums depuis un noeud de sauvegarde et, en même temps, la mesure (130) de la bande passante montante réellement disponible du noeud de sauvegarde lors de ce téléchargement, chaque bloc prémium étant un bloc de données généré par le découpage du fichier de sauvegarde lors de l'étape b) lorsque les données sauvegardées sont des données prémiums,
     - le calcul (110) d'un volume maximal de blocs prémiums enregistrables dans la mémoire de ce noeud de sauvegarde en fonction de la bande passante montante réellement disponible mesurée pour ce noeud de sauvegarde et d'une bande passante montante minimale nécessaire pour permettre la restauration du volume prédéterminé de données prémiums dans la durée maximale de restauration, et
     - lors de l'enregistrement (108) des blocs prémiums dans un noeud de sauvegarde, le procédé inhibe l'enregistrement d'un bloc prémium dans ce noeud de sauvegarde si cela conduit à dépasser le volume maximal de blocs prémiums enregistrables dans ce noeud de sauvegarde.

**2.** Procédé selon la revendication 1, dans lequel la mesure (130) de la bande passante montante réellement disponible comporte les opérations suivantes :

     - l'enregistrement (172) de la taille de l'ensemble de blocs prémiums dans une base de données consultable par tout noeud client du réseau pair-à-pair,
     - le noeud client transmet (176) à un noeud tiers une demande de début de téléchargement de l'ensemble de blocs prémiums à partir du noeud de sauvegarde et, en réponse, le noeud tiers enregistre (180) l'instant de réception de cette demande de début de téléchargement dans la base de données en tant qu'instant de début du téléchargement puis indique, au noeud de sauvegarde, que cette demande de début de téléchargement a été reçue, le noeud tiers étant un noeud du réseau pair-à-pair implémenté sur un calculateur électronique raccordé aux calculateurs électroniques sur lesquels sont implémentés le noeud client et le noeud de sauvegarde par un réseau grande distance de transmission d'informations,
     - en réponse à l'indication de la réception de la demande de début de téléchargement, le noeud de sauvegarde transfère (182) l'ensemble de blocs prémiums au noeud client sans passer par l'intermédiaire du noeud tiers ou d'un autre noeud de sauvegarde, puis
     - lorsque le transfert est terminé, le noeud client transmet (184) au noeud tiers une déclaration de fin de téléchargement, puis
     - en réponse, le noeud tiers enregistre (186) dans la base de données l'instant de réception de la déclaration de fin de téléchargement en tant qu'instant de fin de téléchargement,
- la mesure de la bande passante réellement disponible est calculé (110) à partir des instants de début et de fin de téléchargement et de la taille de l'ensemble de blocs prémiums téléchargé enregistrés dans la base de données.

3.  Procédé selon la revendication 2, dans lequel :

    - le noeud de sauvegarde chiffre (182) l'ensemble de blocs prémiums pour obtenir un ensemble chiffré de blocs prémiums déchiffrables uniquement à l'aide d'une clé secrète de déchiffrement inconnue du noeud client à ce stade,
    - en réponse à l'indication de la réception de la demande de début de téléchargement, l'ensemble de blocs prémiums transférés au noeud client est l'ensemble chiffré de blocs prémiums,
    - en réponse à la réception de la déclaration de fin de téléchargement, le noeud tiers indique (186) au noeud de sauvegarde que cette déclaration de fin de téléchargement a bien été reçue, et
    - en réponse à cette indication de la réception de la déclaration de fin de téléchargement, le noeud de sauvegarde transmet (190) au noeud client la clef de déchiffrement lui permettant de déchiffrer l'ensemble chiffré de blocs prémiums.

4.  Procédé selon la revendication 2, dans lequel :

    - en réponse à la réception de la déclaration de fin de téléchargement, le noeud tiers indique (186) au noeud de sauvegarde que cette déclaration de fin de téléchargement a bien été reçue, et
    - en réponse à l'indication de la réception de cette déclaration de fin de téléchargement, le noeud de sauvegarde compare (188) l'instant auquel cette indication est reçue à un instant réel auquel la transmission de l'ensemble de blocs prémiums vers le noeud client s'est réellement terminée, et
    - si l'écart entre ces deux instants est supérieur à un seuil prédéterminé, le noeud de sauvegarde provoque le marquage de l'instant de fin de téléchargement enregistré dans cette base de données comme étant invalide, et, dans le cas contraire, provoque le marquage de l'instant de fin de téléchargement enregistré comme étant valide, puis
    - la mesure de la bande passante montante réellement disponible du noeud de sauvegarde à partir d'un instant de fin de téléchargement marqué comme invalide est systématiquement inhibée.

5.  Procédé selon l'une quelconque des revendications précédentes, dans lequel :

    - le procédé comporte une phase (120) de restauration du fichier de sauvegarde, lors de laquelle un ensemble complet des blocs prémiums sauvegardés dans le réseau pair-à-pair est téléchargé vers le noeud client, le nombre de blocs de cet ensemble complet étant suffisant pour permettre la restauration complète des données prémiums sauvegardées,
    - lors de chaque phase de restauration, la bande passante montante réellement disponible du noeud de sauvegarde est mesurée (130),
    - en dehors des phases de restauration, le procédé comporte au moins une phase (160) d'échantillonnage lors de laquelle seul un ensemble réduit de blocs prémiums sauvegardés dans le réseau pair-à-pair est téléchargé vers le noeud client, le nombre de blocs de cet ensemble réduit étant insuffisant à lui seul pour permettre une restauration complète des données prémiums sauvegardées, et
    - lors de chacune des phases d'échantillonnage, la bande passante montante réellement disponible du noeud de sauvegarde est mesurée.

6.  Procédé selon l'une quelconque des revendications précédentes, dans lequel la base de données est une chaîne de blocs.

7.  Procédé selon l'une quelconque des revendications précédentes, dans lequel le procédé comporte :

    - l'exécution (104) par le noeud client du logiciel de sauvegarde pour générer un fichier de sauvegarde à partir duquel des données sans qualité de service garantie peuvent être restaurées et le découpage (106) de ce fichier de sauvegarde généré en plusieurs blocs sans qualité de service garantie,
    - l'enregistrement (108) des blocs sans qualité de service garantie dans des mémoires de différents noeuds de sauvegarde du réseau pair-à-pair,
    - lors de phases (120, 150) concomitantes de restauration de blocs prémiums et de blocs sans qualité de service garantie enregistrés dans la mémoire d'un même noeud de sauvegarde, le noeud de sauvegarde alloue prioritairement sa bande passante montante au téléchargement des blocs prémiums au détriment du téléchargement des blocs sans qualité de service garantie.

8.  Procédé selon l'une quelconque des revendications précédentes, dans lequel le routage entre chaque noeud client et chaque noeud de sauvegarde est un routage direct, c'est-à-dire un routage dans lequel les données transférées du noeud de sauvegarde vers le noeud client ne traversent aucun autre noeud de sauvegarde du réseau pair-à-pair.

9. Procédé selon l'une quelconque des revendications précédentes, dans lequel l'étape c) comporte la sélection (110) d'un nombre n restreint de noeuds de sauvegarde parmi l'ensemble des noeuds de sauvegarde du réseau pair-à-pair et l'enregistrement sur chacun de ces n noeuds de sauvegarde d'un seul bloc prémium, où n est le nombre de blocs prémiums produits lors de l'étape b), cette sélection comportant :

- l'association d'un indice de priorité à chaque noeud de sauvegarde, cet indice de priorité associé à un noeud étant proportionnel au produit $bpm_i \times EPD_i / VPmax_i$, où :

- $bpm_i$ est la bande passante montante réellement disponible mesurée pour ce noeud de sauvegarde,
- $VPmax_i$ est le volume maximal de blocs prémiums enregistrables dans la mémoire de ce noeud de sauvegarde,
- $EPD_i$ est le volume maximal d'espace de stockage encore disponible dans la mémoire du noeud de sauvegarde et dans lequel un bloc prémium peut encore être enregistré sans dépasser le volume maximal $VPmax_i$, et

- la sélection des n noeuds de sauvegarde associés aux indices de priorité les plus élevés.

10. Procédé selon la revendication 9, dans lequel l'indice de priorité associé à chaque noeud de sauvegarde est également inversement proportionnel à un nombre $NC_i$ de noeuds clients ayant déjà enregistré des blocs prémiums dans ce noeud de sauvegarde.

11. Procédé selon l'une quelconque des revendications précédentes, dans lequel le volume maximal $VPmax_i$ de blocs prémiums enregistreables dans la mémoire du noeud de sauvegarde est déterminé à l'aide de la relation suivante : $VPmax_i = (VPmaxt \times bpm_i \times k)/bpmt$, où :

- VPmaxt est le volume prédéterminé de données premium restaurable à partir du réseau pair-à-pair dans la durée maximale prédéterminée de restauration,
- $bpm_i$ est la bande passante montante réellement disponible mesurée pour le noeud de sauvegarde,
- bpmt est la bande passante montante minimale nécessaire pour permettre la restauration du volume prédéterminé de données prémiums dans la durée maximale prédéterminée de restauration,
- k est un nombre entier minimal de blocs prémiums que le noeud client doit télécharger pour être capable de restaurer complètement les données prémiums.

12. Procédé selon l'une quelconque des revendications précédentes, dans lequel :

- l'étape c) comporte l'enregistrement de chacun des blocs premium dans un noeud de sauvegarde respectif du réseau pair-à-pair, et
- l'étape b) comporte le découpage du fichier de sauvegarde en au moins k blocs prémiums, le nombre k étant le nombre minimal de blocs prémiums à télécharger depuis k noeuds distincts de sauvegarde pour être capable de restaurer les données prémiums, le nombre k étant telle que la condition suivante est vérifiée pour chacun des k noeuds distincts de sauvegarde : $(1-(D_{maxt}/T)^r)^k > 0{,}9$, où :

- $D_{maxt}$ est la durée maximale prédéterminée de restauration,
- 1/T est la fréquence maximale des restaurations,
- r est égal à $E(bpm_i \times k/bpmt)$,
- la fonction $E(bpm_i \times k/bpmt)$ est la fonction qui retourne la partie entière du produit $bpm_i \times k/bpmt$,
- $bpm_i$ est la bande passante montante réellement disponible mesurée,
- bpmt est la bande passante minimale requise pour être capable de télécharger le volume prédéterminé de données premium à partir du réseau pair-à-pair dans la durée maximale prédéterminée de restauration.

13. Support d'enregistrement d'informations, lisible par un microprocesseur, **caractérisé en ce que** ce support comporte des instructions pour exécuter un procédé de sauvegarde conforme à l'une quelconque des revendications précédentes, lorsque ces instructions sont exécutées par le microprocesseur.

14. Système de sauvegarde de données dans un réseau pair-à-pair, ce système comportant :

- au moins un calculateur électronique (42) programmé pour exécuter un noeud client (10) du réseau pair-à-pair,
- des calculateurs électroniques (60) programmés pour exécuter chacun un noeud (14) de sauvegarde respectif du réseau pair-à-pair, et dans lequel :
- le noeud client (10) est apte à exécuter les étapes suivantes lorsqu'il est exécuté par le calculateur électronique (42) :

a) l'exécution d'un logiciel de sauvegarde pour générer un fichier de sauvegarde à partir duquel les données sauvegardées peuvent être restaurées,
b) le découpage du fichier de sauvegarde généré en plusieurs blocs de données, et
c) l'enregistrement des blocs de données dans la mémoire de différents noeuds de sauvegarde du réseau pair-à-pair,

**caractérisé en ce que** les données sont des données prémiums bénéficiant d'une qualité de service garantie, cette qualité de service correspondant à un volume prédéterminé de données premium restaurable à partir du réseau pair-à-pair en une durée maximale prédéterminée de restauration, le système (2) étant apte à cet effet à réaliser les étapes suivantes :

- le téléchargement par un noeud client du réseau pair-à-pair d'un ensemble d'un ou plusieurs bloc prémiums depuis un noeud de sauvegarde et, en même temps, la mesure de la bande passante montante réellement disponible du noeud de sauvegarde lors de ce téléchargement, chaque bloc prémium étant un bloc de données généré par le découpage du fichier de sauvegarde lors de l'étape b) lorsque les données sauvegardées sont des données prémiums,
- le calcul d'un volume maximal de blocs prémiums enregistrables dans la mémoire de ce noeud de sauvegarde en fonction de la bande passante montante réellement disponible mesurée pour ce noeud de sauvegarde et d'une bande passante montante minimale nécessaire pour permettre la restauration du volume prédéterminé de données prémiums dans la durée maximale de restauration, et
- lors de l'enregistrement des blocs prémiums dans un noeud de sauvegarde, le système inhibe l'enregistrement d'un bloc prémium dans ce noeud de sauvegarde si cela conduit à dépasser le volume maximal de blocs prémiums enregistrables dans ce noeud de sauvegarde.

15. Noeud client pour un système conforme à la revendication 14, dans lequel le noeud client (10) est apte à exécuter les étapes suivantes lorsqu'il est exécuté par un calculateur électronique (42) :

a) l'exécution d'un logiciel de sauvegarde pour générer un fichier de sauvegarde à partir duquel les données sauvegardées peuvent être restaurées,
b) le découpage du fichier de sauvegarde généré en plusieurs blocs de données, et
c) l'enregistrement des blocs de données dans la mémoire de différents noeuds de sauvegarde du réseau pair-à-pair,

**caractérisé en ce que** les données sont des données prémiums bénéficiant d'une qualité de service garantie, cette qualité de service correspondant à un volume prédéterminé de données premium restaurable à partir du réseau pair-à-pair en une durée maximale prédéterminée de restauration, le noeud client (10) étant apte à cet effet à réaliser les étapes suivantes :

- le téléchargement d'un ensemble d'un ou plusieurs bloc prémiums depuis un noeud de sauvegarde qui provoque la mesure de la bande passante montante réellement disponible du noeud de sauvegarde lors de ce téléchargement, chaque bloc prémium étant un bloc de données généré par le découpage du fichier de sauvegarde lors de l'étape b) lorsque les données sauvegardées sont des données prémiums,
- le calcul d'un volume maximal de blocs prémiums enregistrables dans la mémoire de ce noeud de sauvegarde en fonction de la bande passante montante réellement disponible mesurée pour ce noeud de sauvegarde et d'une bande passante montante minimale nécessaire pour permettre la restauration du volume prédéterminé de données prémiums dans la durée maximale de restauration, et
- lors de l'enregistrement des blocs prémiums dans un noeud de sauvegarde, le noeud client inhibe l'enregistrement d'un bloc prémium dans ce noeud de sauvegarde si cela conduit à dépasser le volume maximal de blocs prémiums enregistrables dans ce noeud de sauvegarde.

**Patentansprüche**

1. Verfahren zur Sicherung von Daten in einem Peer-to-Peer-Netzwerk, wobei dieses Verfahren die folgenden Schritte aufweist:

a) Ausführung (104) einer Sicherungssoftware durch einen Client-Knoten des Peer-to-Peer-Netzwerks, um eine Sicherungsdatei zu generieren, von der aus die gesicherten Daten wiederhergestellt werden können,
b) Aufteilung (106) der generierten Sicherungsdatei in mehrere Datenblöcke, und
c) Aufzeichnung (108) der Datenblöcke im Speicher von verschiedenen Sicherungsknoten des Peer-to-Peer-Netzwerks,

**dadurch gekennzeichnet, dass** die Daten Premium-Daten sind, die von einer garantierten Dienstqualität profitieren, wobei diese Dienstqualität einem vorbestimmten Volumen von Premium-Daten entspricht, das ausgehend vom Peer-to-Peer-Netzwerk in einer vorbestimmten maximalen Wiederherstellungsdauer wiederherstellbar ist, wobei dieses Verfahren zu diesem Zweck aufweist:

- Download (182) durch einen Client-Knoten des Peer-to-Peer-Netzwerks einer Einheit von einem oder mehreren Premium-Blöcken ausgehend von einem Sicherungsknoten, und gleichzeitig die Messung (130) der bei diesem Download tatsächlich verfügbaren Aufwärtsbandbreite des Sicherungsknotens, wobei jeder Premium-Block ein durch die Aufteilung der Sicherungsdatei im Schritt b) generierter Datenbock ist, wenn die gesicherten Daten Premium-Daten sind,
- die Berechnung (110) eines maximalen Volumens von im Speicher dieses Sicherungsknotens aufzeichenbaren Premium-Blöcken abhängig von der für diesen Sicherungsknoten gemessenen tatsächlich verfügbaren Aufwärtsbandbreite und einer minimalen Aufwärtsbandbreite, die notwendig ist, um die Wiederherstellung des vorbestimmten Volumens von Premium-Daten in der maximalen Wiederherstellungsdauer zu erlauben, und
- das Verfahren bei der Aufzeichnung (108) der Premium-Blöcke in einem Sicherungsknoten die Aufzeichnung eines Premium-Blocks in diesem Sicherungsknoten verhindert, wenn dies dazu führt, das maximale Volumen von in diesem Sicherungsknoten aufzeichenbaren Premium-Blöcken zu überschreiten.

2. Verfahren nach Anspruch 1, wobei die Messung (130) der tatsächlich verfügbaren Aufwärtsbandbreite die folgenden Vorgänge aufweist:

- Aufzeichnung (172) der Größe der Einheit von Premium-Blöcken in einer Datenbank, die von jedem Client-Knoten des Peer-to-Peer-Netzwerks einsehbar ist,
- der Client-Knoten überträgt (176) eine Download-Start-Anforderung der Einheit von Premium-Blöcken ausgehend vom Sicherungsknoten an einen Drittknoten, und als Antwort zeichnet der Drittknoten den Empfangszeitpunkt dieser Download-Start-Anforderung in der Datenbank als Start-Zeitpunkt des Downloads auf (180), zeigt dann dem Sicherungsknoten an, dass diese Download-Start-Anforderung empfangen wurde, wobei der Drittknoten ein Knoten des Peer-to-Peer-Netzwerks ist, der auf einem elektronischen Rechner implementiert ist, der an die elektronischen Rechner angeschlossen ist, auf denen der Client-Knoten und der Sicherungsknoten durch ein Informationsübertragungs-Fernnetz implementiert werden,
- als Antwort auf die Anzeige des Empfangs der Download-Start-Anforderung leitet (182) der Sicherungsknoten die Einheit von Premium-Blöcken an den Client-Knoten weiter, ohne über den Drittknoten oder einen anderen Sicherungsknoten zu gehen, dann
- wenn die Weiterleitung beendet ist, überträgt (184) der Client-Knoten eine Download-Abschluss-Erklärung an den Drittknoten, dann
- als Antwort zeichnet der Drittknoten in der Datenbank den Empfangszeitpunkt der Download-Abschluss-Erklärung als Zeitpunkt des Download-Abschlusses auf (186),
- Messung der tatsächlich verfügbaren Bandbreite wird ausgehend von den Start- und Abschluss-Zeitpunkten des Downloads und der Größe der downgeloadeten Einheit von Premium-Blöcken berechnet (110), die in der Datenbank aufgezeichnet sind.

3. Verfahren nach Anspruch 2, wobei:

- der Sicherungsknoten die Einheit von Premium-Blöcken verschlüsselt (182), um eine verschlüsselte Einheit von Premium-Blöcken zu erhalten, die nur mit Hilfe eines dem Client-Knoten in diesem Stadium unbekannten Entschlüsselungs-Geheimschlüssel entschlüsselbar sind,
- als Antwort auf die Anzeige des Empfangs der Download-Start-Anforderung die Einheit von an den Client-Knoten weitergeleiteten Premium-Blöcken die verschlüsselte Einheit von Premium-Blöcken ist,
- als Antwort auf den Empfang der Download-Abschluss-Erklärung der Drittknoten dem Sicherungsknoten anzeigt (286), dass diese Download-Abschluss-Erklärung empfangen wurde, und
- als Antwort auf diese Anzeige des Empfangs der Download-Abschluss-Erklärung der Sicherungsknoten den Entschlüsselungsschlüssel an den Client-Knoten überträgt (190), der es ihm erlaubt, die verschlüsselte Einheit von Premium-Blöcken zu entschlüsseln.

4. Verfahren nach Anspruch 2, wobei:

- als Antwort auf den Empfang der Download-Abschluss-Erklärung der Drittknoten dem Sicherungsknoten anzeigt (186), dass diese Download-Abschluss-Erklärung empfangen wurde, und
- als Antwort auf die Anzeige des Empfangs dieser Download-Abschluss-Erklärung der Sicherungsknoten den Zeitpunkt, an dem diese Anzeige empfangen wird, mit einem realen Zeitpunkt vergleicht (188), an dem die Übertragung der Einheit von Premium-Blöcke an den Client-Knoten tatsächlich geendet hat, und
- wenn die Abweichung zwischen diesen zwei Zeitpunkten größer ist als eine vorbestimmte Schwelle, der Sicherungsknoten die Markierung des in dieser Datenbank aufgezeichneten Download-Abschluss-Zeitpunkts als ungültig verursacht, und im gegenteiligen Fall die Markierung des aufgezeichneten Download-Abschluss-Zeitpunkts als gültig verursacht, dann
- die Messung der tatsächlich verfügbaren Aufwärtsbandbreite des Sicherungsknotens ausgehend von einem als ungültig markierten Download-Abschluss-Zeitpunkt systematisch verhindert wird.

5. Verfahren nach einem der vorhergehenden Ansprüche, wobei:

- das Verfahren eine Phase (120) der Wiederherstellung der Sicherungsdatei aufweist, während der eine vollständige Einheit der im Peer-to-Peer-Netzwerk gesicherten Premium-Blöcke zum Client-Knoten downgeloadet wird, wobei die Anzahl von Blöcken dieser vollständigen Einheit ausreichend ist, um die vollständige Wiederherstellung der gesicherten Premium-Daten zu erlauben,
- in jeder Wiederherstellungsphase die tatsächlich verfügbare Aufwärtsbandbreite des Sicherungsknotens gemessen wird (130),
- außerhalb der Wiederherstellungsphasen das Verfahren mindestens eine Abtastphase (160) aufweist, während der nur eine reduzierte Einheit von im Peer-to-Peer-Netzwerk gesicherten Premium-Blöcken zum Client-Knoten downgeloadet wird, wobei die Anzahl von Blöcken dieser reduzierten Einheit alleine nicht ausreicht, um eine vollständige Wiederherstellung der gesicherten Premium-Daten zu erlauben, und
- in jeder der Abtastphasen die tatsächlich verfügbare Aufwärtsbandbreite des Sicherungsknotens gemessen wird.

6. Verfahren nach einem der vorhergehenden Ansprüche, wobei die Datenbank eine Kette von Blöcken ist.

7. Verfahren nach einem der vorhergehenden Ansprüche, wobei das Verfahren aufweist:

- Ausführung (104) der Sicherungssoftware durch den Client-Knoten, um eine Sicherungsdatei zu generieren, von der ausgehend Daten ohne garantierte Dienstqualität wiederhergestellt werden können, und die Aufteilung (106) dieser generierten Sicherungsdatei in mehrere Blöcke ohne garantierte Dienstqualität,
- Aufzeichnung (108) der Blöcke ohne garantierte Dienstqualität in Speichern verschiedener Sicherungsknoten des Peer-to-Peer-Netzwerks,
- in gleichzeitigen Phasen (120, 150) der Wiederherstellung von Premium-Blöcken und von Blöcken ohne garantierte Dienstqualität, die im Speicher eines gleichen Sicherungsknotens aufgezeichnet sind, weist der Sicherungsknoten prioritär seine Aufwärtsbandbreite dem Download der Premium-Blöcke zu Lasten des Downloads der Blöcke ohne garantierte Dienstqualität zu.

8. Verfahren nach einem der vorhergehenden Ansprüche, wobei das Routing zwischen jedem Client-Knoten und jedem Sicherungsknoten ein direktes Routing ist, d.h. ein Routing, bei dem die vom Sicherungsknoten zum Client-Knoten weitergeleiteten Daten keinen anderen Sicherungsknoten des Peer-to-Peer-Netzwerks durchqueren.

9. Verfahren nach einem der vorhergehenden Ansprüche, wobei der Schritt c) die Auswahl (110) einer begrenzten Anzahl n von Sicherungsknoten unter der Einheit der Sicherungsknoten des Peer-to-Peer-Netzwerks und die Aufzeichnung auf jedem dieser n Sicherungsknoten eines einzigen Premium-Blocks aufweist, wobei n die Anzahl von Premium-Blöcken ist, die im Schritt b) erzeugt werden, wobei diese Auswahl aufweist:

- Zuordnung eines Prioritätsindex zu jedem Sicherungsknoten, wobei dieser einem Knoten zugeordnete Prioritätsindex proportional zum Produkt $bpm_i \times EPD_i / VPmax_i$ ist, wobei :

- $bpm_i$ die für diesen Sicherungsknoten gemessene tatsächlich verfügbare Aufwärtsbandbreite ist,
- $VPmax_i$ das maximale Volumen von Premium-Blöcken ist, die im Speicher dieses Sicherungsknotens aufgezeichnet werden können,
- $EPD_i$ das maximale Speicherplatzvolumen ist, das noch im Speicher des Sicherungsknotens verfügbar ist, und in dem ein Premium-Block noch aufgezeichnet werden kann, ohne das maximale Volumen $VPmax_i$ zu überschreiten, und
- Auswahl der n Sicherungsknoten, die den höchsten Prioritätsindices zugeordnet sind.

10. Verfahren nach Anspruch 9, wobei der jedem Sicherungsknoten zugeordnete Prioritätsindex ebenfalls umgekehrt proportional zu einer Anzahl $NC_i$ von Client-Knoten ist, die bereits Premium-Blöcke in diesem Sicherungsknoten aufgezeichnet haben.

11. Verfahren nach einem der vorhergehenden Ansprüche, wobei das maximale Volumen $VPmax_i$ von im Speicher des Sicherungsknotens aufzeichenbaren Premium-Blöcken mit Hilfe der folgenden Beziehung bestimmt wird : $VPmax_i = (VPmaxt \times bpm_i \times k)/bpmt$, wobei:

- VPmaxt das vorbestimmte Volumen von Premium-Daten ist, das ausgehend vom Peer-to-Peer-Netzwerk in der vorbestimmten maximalen Wiederherstellungsdauer wiederherstellbar ist,
- $bpm_i$ die für den Sicherungsknoten gemessene tatsächlich verfügbare Aufwärtsbandbreite ist,
- bpmt die minimale Aufwärtsbandbreite ist, die notwendig ist, um die Wiederherstellung des vorbestimmten Volumens von Premium-Daten in der vorbestimmten maximalen Wiederherstellungsdauer zu erlauben,
- k eine minimale ganze Zahl von Premium-Blöcken ist, die der Client-Knoten downloaden muss, um fähig zu sein, die Premium-Daten vollständig wiederherzustellen.

12. Verfahren nach einem der vorhergehenden Ansprüche, wobei:

- der Schritt c) die Aufzeichnung jedes der Premium-Blöcke in einem jeweiligen Sicherungsknoten des Peer-to-Peer-Netzwerks aufweist, und
- der Schritt b) die Aufteilung der Sicherungsdatei in mindestens k Premium-Blöcke aufweist, wobei die Zahl k die minimale Anzahl von ausgehend von k unterschiedlichen Sicherungsknoten downzuloadenen Premium-Blöcken ist, um fähig zu sein, die Premium-Daten wiederherzustellen, wobei die Zahl k so ist, dass die folgende Bedingung für jeden der unterschiedlichen k Sicherungsknoten erfüllt ist : $(1-(D_{maxt}/T)^r)^k > 0,9$, wobei:

- $D_{maxt}$ die vorbestimmte maximale Wiederherstellungsdauer ist,
- 1/T die maximale Frequenz der Wiederherstellungen ist,
- r gleich $E(bpm_i \times k/bpmt)$ ist,
- die Funktion $E(bpm_i \times k/bpmt)$ die Funktion ist, die den Ganzzahlteil des Produkts $bpm_i \times k/bpmt$ umkehrt,
- $bpm_i$ die gemessene tatsächlich verfügbare Aufwärtsbandbreite ist,
- bpmt die erforderliche minimale Bandbreite ist, um fähig zu sein, das vorbestimmte Volumen von Premium-Daten ausgehend vom Peer-to-Peer-Netzwerk in der vorbestimmten maximalen Wiederherstellungsdauer downzuloaden.

13. Informationsaufzeichnungsträger, lesbar von einem Mikroprozessor, **dadurch gekennzeichnet, dass** dieser Träger Anweisungen aufweist, um ein Sicherungsverfahren gemäß einem der vorhergehenden Ansprüche auszuführen, wenn diese Anweisungen vom Mikroprozessor ausgeführt werden.

14. Datensicherungssystem in einem Peer-to-Peer-Netzwerk, wobei dieses System aufweist:

- mindestens einen elektronischen Rechner (42), der programmiert ist, einen Client-Knoten (10) des Peer-to-Peer-Netzwerks auszuführen,
- elektronische Rechner (60), die programmiert sind, jeder einen Sicherungsknoten (14) des Peer-to-Peer-Netzwerks auszuführen, und wobei:
- der Client-Knoten (10) geeignet ist, die folgenden Schritte auszuführen, wenn er vom elektronischen Rechner (42) ausgeführt wird :

a) Ausführung einer Sicherungssoftware, um eine Sicherungsdatei zu generieren, von der aus die gesicherten Daten wiederhergestellt werden können,
b) Aufteilung der generierten Sicherungsdatei in mehrere Datenblöcke, und
c) Aufzeichnung der Datenblöcke im Speicher verschiedener Sicherungsknoten des Peer-to-Peer-Netzwerks,

**dadurch gekennzeichnet, dass** die Daten Premium-Daten sind, die von einer garantierten Dienstqualität profitieren, wobei diese Dienstqualität einem vorbestimmten Volumen von Premium-Daten entspricht, das ausgehend vom Peer-to-Peer-Netzwerk in einer vorbestimmten maximalen Wiederherstellungsdauer wiederherstellbar ist, wobei das System (2) zu diesem Zweck geeignet ist, die folgenden Schritte durchzuführen :

- Download einer Einheit von einem oder mehreren Premium-Blöcken ausgehend von einem Sicherungsknoten durch einen Client-Knoten des Peer-to-Peer-Netzwerks, und gleichzeitig die Messung der bei diesem Download tatsächlich verfügbaren Aufwärtsbandbreite des Sicherungsknotens, wobei jeder Premium-Block ein durch die Aufteilung der Sicherungsdatei im Schritt b) generierter Datenblock ist, wenn die gesicherten Daten Premium-Daten sind,
- Berechnung eines maximalen Volumens von im Speicher dieses Sicherungsknotens aufzeichenbaren Premium-Blöcken abhängig von der gemessenen tatsächlich für diesen Sicherungsknoten verfügbaren Aufwärtsbandbreite und von einer minimalen Aufwärtsbandbreite, die notwendig ist, um die Wiederherstellung des vorbestimmten Volumens von Premium-Daten in der maximalen Wiederherstellungsdauer zu erlauben, und

- bei der Aufzeichnung der Premium-Blöcke in einem Sicherungsknoten das System die Aufzeichnung eines Premium-Blocks in diesem Sicherungsknoten verhindert, wenn dies dazu führt, das maximale Volumen von in diesem Sicherungsknoten aufzeichenbaren Premium-Blöcken zu überschreiten.

15. Client-Knoten für ein System gemäß Anspruch 14, wobei der Client-Knoten (10) geeignet ist, die folgenden Schritte auszuführen, wenn er von einem elektronischen Rechner (42) ausgeführt wird :

a) Ausführung einer Sicherungssoftware, um eine Sicherungsdatei zu generieren, von der aus die gesicherten Daten wiederhergestellt werden können,
b) Aufteilung der generierten Sicherungsdatei in mehrere Datenblöcke, und
c) Aufzeichnung der Datenblöcke im Speicher von unterschiedlichen Sicherungsknoten des Peer-to-Peer-Netzwerks,

**dadurch gekennzeichnet, dass** die Daten Premium-Daten sind, die von einer garantierten Dienstqualität profitieren, wobei diese Dienstqualität einem vorbestimmten Volumen von Premium-Daten entspricht, das ausgehend vom Peer-to-Peer-Netzwerk in einer vorbestimmten maximalen Wiederherstellungsdauer wiederherstellbar ist, wobei der Client-Knoten (10) zu diesem Zweck geeignet ist, die folgenden Schritte durchzuführen:

- Download einer Einheit von einem oder mehreren Premium-Blöcken ausgehend von einem Sicherungsknoten, der die Messung der bei diesem Download tatsächlich verfügbaren Aufwärtsbandbreite des Sicherungsknotens verursacht, wobei jeder Premium-Block ein durch die Aufteilung der Sicherungsdatei im Schritt b) generierter Datenblock ist, wenn die gesicherten Daten Premium-Daten sind,
- Berechnung eines maximalen Volumens von im Speicher dieses Sicherungsknotens aufzeichenbaren Premium-Blöcken abhängig von der gemessenen tatsächlich für diesen Sicherungsknoten verfügbaren Aufwärtsbandbreite und von einer minimalen Aufwärtsbandbreite, die notwendig ist, um die Wiederherstellung des vorbestimmten Volumens von Premium-Daten in der maximalen Wiederherstellungsdauer zu erlauben, und

- bei der Aufzeichnung der Premium-Blöcke in einem Sicherungsknoten verhindert der Client-Knoten die Aufzeichnung eines Premium-Blocks in diesem Sicherungsknoten, wenn dies dazu führt, das maximale Volumen von in diesem Sicherungsknoten aufzeichenbaren Premium-Blöcken zu überschreiten.

**Claims**

1. Method for backing up data in a peer-to-peer network, this method comprising the following steps:

a) a client node of the peer-to-peer network executing (104) backup software in order to generate a backup file from which the backed-up data are able to be restored,
b) dividing (106) the generated backup file into a plurality of data blocks, and
c) saving (108) the data blocks in the memory of various backup nodes of the peer-to-peer network,

**characterized in that** the data are premium data benefiting from a guaranteed quality of service, this quality of service corresponding to a predetermined volume of premium data able to be restored from the peer-to-peer network within a predetermined maximum restoration period, this method comprising, for this purpose:

- a client node of the peer-to-peer network downloading (182) a set of one or more premium blocks from a backup node and, at the same time, measuring (130) the actually available uplink bandwidth of the backup node during this download, each premium block being a data block generated by dividing the backup file in step b) when the backed-up data are premium data,
- computing (110) a maximum volume of premium blocks able to be saved in the memory of this backup node on the basis of the actually available uplink bandwidth measured for this backup node and of a minimum uplink bandwidth necessary to allow the restoration of the predetermined volume of premium data within the maximum restoration period, and
- when the premium blocks are saved (108) in a backup node, the method prohibits a premium block from being saved in this backup node if this leads to the maximum volume of premium blocks able to be saved in this backup node being exceeded.

2. Method according to Claim 1, wherein measuring (130) the actually available uplink bandwidth comprises the following operations:

- saving (172) the size of the set of premium blocks in a database able to be consulted by any client node of the peer-to-peer network,
- the client node transmits (176), to a third-party node, a download start request to start downloading the set of premium blocks from the backup node, and in response, the third-party node saves (180) the time of receipt of this download start request in the database as a download start time and then indicates, to the backup node, that this download start request has been received, the third-party node being a node of the peer-to-peer network implemented on an electronic computer connected to the electronic computers on which the client node and the backup node are implemented by a long-range information transmission network,
- in response to the indication of the receipt of the download start request, the backup node transfers (182) the set of premium blocks to the client node without passing via the third-party node or another backup node, and then
- when the transfer has ended, the client node transmits (184) an end of download declaration to the third-party node, and then
- in response, the third-party node saves (186) the time of receipt of the end of download declaration in the database as an end of download time,
- the measurement of the actually available bandwidth is computed (110) based on the start and end of download times and on the size of the downloaded set of premium blocks saved in the database.

3. Method according to Claim 2, wherein:

- the backup node encrypts (182) the set of premium blocks in order to obtain an encrypted set of premium blocks able to be decrypted only using a secret decryption key unknown to the client node at this stage,
- in response to the indication of the receipt of the download start request, the set of premium blocks transferred to the client node is the encrypted set of premium blocks,
- in response to the receipt of the end of download declaration, the third-party node indicates (186) to the backup node that this end of download declaration has been correctly received, and
- in response to this indication of the receipt of the end of download declaration, the backup node transmits (190), to the client node, the decryption key allowing it to decrypt the encrypted set of premium blocks.

4. Method according to Claim 2, wherein:

- in response to the receipt of the end of download declaration, the third-party node indicates (186) to the backup node that this end of download declaration has been correctly received, and
- in response to the indication of the receipt of this end of download declaration, the backup node compares (188) the time at which this indication is received with a real time at which the transmission of the set of premium blocks to the client node actually ended, and
- if the difference between these two times is greater than a predetermined threshold, the backup node brings about tagging of the end of download time saved in this database as being invalid and, if not, brings about the tagging of the saved end of download time as being valid, and then
- the measurement of the actually available uplink bandwidth of the backup node based on an end of download time tagged as invalid is systematically prohibited.

5. Method according to any one of the preceding claims, wherein:

- the method comprises a phase (120) of restoring the backup file, during which a complete set of the premium blocks saved in the peer-to-peer network is downloaded to the client node, the number of blocks of this complete set being sufficient to allow complete restoration of the backed-up premium data,
- during each restoration phase, the actually available uplink bandwidth of the backup node is measured (130),
- outside of the restoration phases, the method comprises at least one sampling phase (160) during which only a reduced set of premium blocks backed up in the peer-to-peer network is downloaded to the client node, the number of blocks of this reduced set being insufficient on its own to allow complete restoration of the backed-up premium data, and
- during each of the sampling phases, the actually available uplink bandwidth of the backup node is measured.

6. Method according to any one of the preceding claims, wherein the database is a blockchain.

7. Method according to any one of the preceding claims, wherein the method comprises:

- the client node executing (104) the backup software in order to generate a backup file from which data without a guaranteed quality of service are able to be restored and dividing (106) this generated backup file into a plurality of blocks without a guaranteed quality of service,
- saving (108) the blocks without a guaranteed quality of service in memories of various backup nodes of the peer-to-peer network,
- during concomitant phases (120, 150) of restoring premium blocks and blocks without a guaranteed quality of service saved in the memory of one and the same backup node, the backup node allocates its uplink bandwidth as a priority to the downloading of the premium blocks to the detriment of the downloading of the blocks without a guaranteed quality of service.

8. Method according to any one of the preceding claims, wherein the routing between each client node and each backup node is direct routing, that is to say routing in which the data transferred from the backup node to the client node do not pass through any other backup node of the peer-to-peer network.

9. Method according to any one of the preceding claims, wherein step c) comprises selecting (110) a limited number n of backup nodes from among all of the backup nodes of the peer-to-peer network and saving a single premium block on each of these n backup nodes, where n is the number of premium blocks produced in step b), this selection comprising:

- associating a priority index with each backup node, this priority index associated with a node being proportional to the product $bpm_i \times EPD_i/VPmax_i$, where:

- $bpm_i$ is the actually available uplink bandwidth measured for this backup node,

- $VPmax_i$ is the maximum volume of premium blocks able to be saved in the memory of this backup node,
- $EPD_i$ is the maximum volume of storage space still available in the memory of the backup node and in which a premium block is still able to be saved without exceeding the maximum volume $VPmax_i$, and

- selecting the n backup nodes associated with the highest priority indices.

10. Method according to Claim 9, wherein the priority index associated with each backup node is also inversely proportional to a number $NC_i$ of client nodes that have already saved premium blocks in this backup node.

11. Method according to any one of the preceding claims, wherein the maximum volume $VPmax_i$ of premium blocks able to be saved in the memory of the backup node is determined using the following relatioship: $VPmax_i = (VPmaxt \times bpm_i \times k)/ bpmt$, where:

- VPmaxt is the predetermined volume of premium data able to be restored from the peer-to-peer network within the predetermined maximum restoration period,
- $bpm_i$ is the actually available uplink bandwidth measured for the backup node,
- bpmt is the minimum uplink bandwidth necessary to allow the restoration of the predetermined volume of premium data within the predetermined maximum restoration period,
- k is a minimum whole number of premium blocks that the client node has to download in order to be capable of completely restoring the premium data.

12. Method according to any one of the preceding claims, wherein:

- step c) comprises saving each of the premium blocks in a respective backup node of the peer-to-peer network, and
- step b) comprises dividing the backup file into at least k premium blocks, the number k being the minimum number of premium blocks to be downloaded from k separate backup nodes in order to be capable of restoring the premium data, the number k being such that the following condition is satisfied for each of the k separate backup nodes: $(1-D_{maxt}/T)^r)^K > 0.9$, where:

- $D_{maxt}$ is the predetermined maximum restoration period,
- 1/T is the maximum frequency of the restorations,
- r is equal to $E(bpm_i \times k/bpmt)$,
- the function $E(bpm_i \times k/bpmt)$ is the function that returns the integer portion of the product $bpm_i \times k/bpmt$,
- $bpm_i$ is the measured actually available uplink bandwidth,
- bpmt is the minimum bandwidth required to be capable of downloading the predetermined volume of premium data from the peer-to-peer network within the predetermined maximum restoration period.

13. Information recording medium, able to be read by a microprocessor, **characterized in that** this medium comprises instructions for executing a backup method according to any one of the preceding claims when these instructions are executed by the micro-

**EP 3 970 348 B1**

processor.

**14.** System for backing up data in a peer-to-peer network, this system comprising:

- at least one electronic computer (42) programmed to execute a client node (10) of the peer-to-peer network,
- electronic computers (60) each programmed to execute a respective backup node (14) of the peer-to-peer network, and wherein:
- the client node (10) is able to execute the following steps when it is executed by the electronic computer (42):

a) executing backup software in order to generate a backup file from which the backed-up data are able to be restored,
b) dividing the generated backup file into a plurality of data blocks, and
c) saving the data blocks in the memory of various backup nodes of the peer-to-peer network,

**characterized in that** the data are premium data benefiting from a guaranteed quality of service, this quality of service corresponding to a predetermined volume of premium data able to be restored from the peer-to-peer network within a predetermined maximum restoration period, the system (2) being able, for this purpose, to carry out the following steps:

- a client node of the peer-to-peer network downloading a set of one or more premium blocks from a backup node and, at the same time, measuring the actually available uplink bandwidth of the backup node during this download, each premium block being a data block generated by dividing the backup file in step b) when the backed-up data are premium data,
- computing a maximum volume of premium blocks able to be saved in the memory of this backup node on the basis of the actually available uplink bandwidth measured for this backup node and of a minimum uplink bandwidth necessary to allow the restoration of the predetermined volume of premium data within the maximum restoration period, and
- when the premium blocks are saved in a backup node, the system prohibits a premium block from being saved in this backup node if this leads to the maximum volume of premium blocks able to be saved in this backup node being exceeded.

**15.** Client node for a system according to Claim 14, wherein the client node (10) is able to execute the following steps when it is executed by an electronic computer (42):

a) executing backup software in order to generate a backup file from which the backed-up data are able to be restored,
b) dividing the generated backup file into a plurality of data blocks, and
c) saving the data blocks in the memory of various backup nodes of the peer-to-peer network,

**characterized in that** the data are premium data benefiting from a guaranteed quality of service, this quality of service corresponding to a predetermined volume of premium data able to be restored from the peer-to-peer network within a predetermined maximum restoration period, the client node (10) being able, for this purpose, to carry out the following steps:

- downloading a set of one or more premium blocks from a backup node, which brings about the measurement of the actually available uplink bandwidth of the backup node during this download, each premium block being a data block generated by dividing the backup file in step b) when the backed-up data are premium data,
- computing a maximum volume of premium blocks able to be saved in the memory of this backup node on the basis of the actually available uplink bandwidth measured for this backup node and of a minimum uplink bandwidth necessary to allow the restoration of the predetermined volume of premium data within the maximum restoration period, and
- when the premium blocks are saved in a backup node, the client node prohibits a premium block from being saved in this backup node if this leads to the maximum volume of premium blocks able to be saved in this backup node being exceeded.

Fig. 1

Fig. 2

Fig. 3

**EP 3 970 348 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006271601 A

- US 2017351581 A1

**Littérature non-brevet citée dans la description**

- **OLIVIER DALLE.** Analysis of Failure Corrélation in Peer-to-Peer Storage Systems. *INRIA, rapport de recherche n° 6771,* Décembre 2008